(19) Europäisches Patentamt / European Patent Office / Office européen des brevets

(11) **EP 4 383 137 A1**

(12) **EUROPEAN PATENT APPLICATION**

(43) Date of publication:
**12.06.2024 Bulletin 2024/24**

(21) Application number: **23194793.8**

(22) Date of filing: **01.09.2023**

(51) International Patent Classification (IPC):
***G06N 5/01*** ***(2023.01)*** ***G06N 7/01*** ***(2023.01)***

(52) Cooperative Patent Classification (CPC):
**G06N 5/01; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2022 JP 2022196481**

(71) Applicant: **FUJITSU LIMITED**
**Kawasaki-shi, Kanagawa 211-8588 (JP)**

(72) Inventors:
- **YIN, Fang**
  **Kawasaki-shi, Kanagawa, 211-8588 (JP)**
- **WATANABE, Yasuhiro**
  **Kawasaki-shi, Kanagawa, 211-8588 (JP)**
- **TAMURA, Hirotaka**
  **Yokohama-shi, Kanagawa, 223-0066 (JP)**

(74) Representative: **Hoffmann Eitle**
**Patent- und Rechtsanwälte PartmbB**
**Arabellastraße 30**
**81925 München (DE)**

# (54) DATA PROCESSING DEVICE, DATA PROCESSING PROGRAM, AND DATA PROCESSING METHOD

(57) A data processing device configured to: repeat, at a time of searching for a solution, a search process that includes determining whether to permit a change in a value of a first state variable among a plurality of state variables based on a first local field, updating a value of the first state variable, the first local field, a second local field, and a total value when the change in the value of the first state variable is permitted, determining whether to permit a change in a value of a first auxiliary variable among a plurality of auxiliary variables based on the second local field, and updating the value of the first auxiliary variable and the first local field when the change in the value of the first auxiliary variable is permitted, and adjust the value of the coefficient based on the total value or whether there is the violation.

FIG. 1

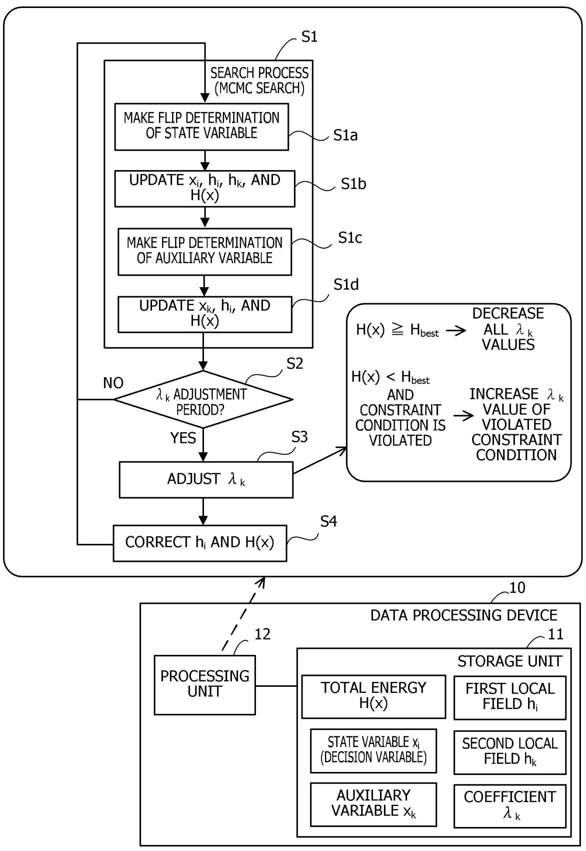


EP 4 383 137 A1

Processed by Luminess, 75001 PARIS (FR)

## Description

FIELD

The embodiments discussed herein are related to a data processing device, a data processing program, and a data processing method.

BACKGROUND

There is a method of converting a combinatorial optimization problem into an Ising model that represents a spin behavior of a magnetic body at a time of searching for a solution to the combinatorial optimization problem. The Ising model is represented by an Ising-type evaluation function that evaluates the solution to the combinatorial optimization problem. The Ising-type evaluation function includes a plurality of state variables (representing a state of the Ising model) and a plurality of weight values. In the Ising-type evaluation function, the state variable is a binary variable that takes a value of 0 or 1 (or -1 or +1). The state variable may be referred to as a bit. Furthermore, a value of the Ising-type evaluation function may also be referred to as energy of the Ising model.

In the solution search, a Markov-Chain Monte Carlo (MCMC) method is used. Hereinafter, the solution search based on the MCMC method will be referred to as an MCMC search. In the MCMC search, for example, a state transition is accepted with an acceptance probability of the state transition specified by a Metropolis method or a Gibbs method. At this time, a state transition that increases energy is also stochastically permitted. Note that the acceptance probability decreases as an amount of increase in energy increases. Examples of the MCMC method include simulated annealing and a replica exchange method. In such an MCMC search, a state of the Ising model in which the value of the Ising-type evaluation function is minimized is searched for. The state where the minimum value of local minimum values of the evaluation function is reached is to be an optimum solution.

Meanwhile, some combinatorial optimization problems have constraint conditions to be satisfied by a solution, and a method of performing a search in consideration of the constraint condition has been proposed. Examples of the constraint condition include an inequality constraint, an equality constraint, an absolute value constraint, and the like. The evaluation function reflecting the constraint condition includes a constraint term having a value corresponding to presence or absence of constraint condition violation. The constraint term is weighted by a coefficient representing weight of the constraint condition.

Japanese Laid-open Patent Publication No. 2020-201598, Japanese Laid-open Patent Publication No. 2020-204928, U.S. Patent Application Publication No. 2021/0216897, and U.S. Patent Application Publication No. 2021/0271214 are disclosed as related art.

SUMMARY

[TECHNICAL PROBLEM]

In a case where the coefficient value representing the weight of the constraint condition is not appropriate, search efficiency may deteriorate in the MCMC search. For example, when the coefficient value representing the weight of the constraint condition is small, the amount of increase in energy at a time of transitioning to a state not satisfying the constraint condition (hereinafter referred to as a constraint violation solution) decreases. In this case, the constraint violation solution is likely to occur, and the search efficiency deteriorates. On the other hand, when the coefficient value described above is large, the state transition is less likely to occur, and the search efficiency deteriorates.

In one aspect, an object of the embodiments is to provide a data processing device, a program, and a data processing method capable of improving efficiency in searching for a solution to a combinatorial optimization problem.

According to an aspect of the embodiments, a data processing device includes a storage unit that stores values of a plurality of state variables included in an Ising-type evaluation function that evaluates a solution to a combinatorial optimization problem, values of a plurality of auxiliary variables that represent whether there is violation of each of a plurality of constraint conditions of the combinatorial optimization problem, a total value of values of a plurality of constraint terms weighted by a coefficient that represents a weight of each of the plurality of constraint conditions and a value of the evaluation function, a first local field that represents a change amount of the total value when each of the values of the plurality of state variables changes, a second local field used to specify a constraint violation amount for each of the plurality of constraint conditions, and a value of the coefficient; and a processing unit that: repeats, at a time of searching for the solution, a search process that includes determining whether to permit a change in a value of a first state variable among the plurality of state variables based on the first local field, updating the value of the first state variable, the first local field, the second local field, and the total value when the change in the value of the first state variable is determined to be permitted, determining whether to permit a change in a value of a first auxiliary variable among the plurality of auxiliary variables based on the second local field, and updating the value of the first auxiliary variable and the first local field when the change in the value of the first auxiliary variable is determined to be permitted, and adjusts the value of the coefficient based on one selected from the total value and whether there is the violation.

[ADVANTAGEOUS EFFECTS OF INVENTION]

In one aspect, the embodiments may improve the efficiency in searching for a solution to a combinatorial optimization problem.

BRIEF DESCRIPTION OF DRAWINGS

FIG. 1 is a diagram illustrating an example of a data processing device and a data processing method according to a first embodiment;
FIG. 2 is a diagram illustrating exemplary correlation between state variables and auxiliary variables;
FIG. 3 is a block diagram illustrating exemplary hardware of a data processing device according to a second embodiment;
FIG. 4 is a block diagram illustrating exemplary functions of the data processing device;
FIG. 5 is a diagram illustrating an example of a variable setting unit and a $\lambda_k$ adjustment unit;
FIG. 6 is a diagram illustrating an exemplary update and correction process of a local field;
FIG. 7 is a flowchart illustrating an exemplary flow of a data processing method;
FIG. 8 is a flowchart illustrating an exemplary flow of a processing procedure of an MCMC search;
FIG. 9 is a timing chart illustrating exemplary adjustment timing of $\lambda_k$ of each replica in pipeline processing;
FIG. 10 is a timing chart illustrating exemplary pipeline processing of a plurality of replicas;
FIG. 11 is a diagram illustrating another example of the data processing device; and
FIG. 12 is a diagram illustrating an example using a four-value auxiliary variable.

DESCRIPTION OF EMBODIMENTS

Hereinafter, modes for carrying out the embodiments will be described with reference to the drawings.

(First Embodiment)

FIG. 1 is a diagram illustrating an example of a data processing device and a data processing method according to a first embodiment.
A data processing device 10 according to the first embodiment includes a storage unit 11 and a processing unit 12.
The storage unit 11 is, for example, a volatile storage device (e.g., electronic circuit such as dynamic random access memory (DRAM)), or a non-volatile storage device (e.g., electronic circuit such as flash memory, hard disk drive (HDD), etc.). The storage unit 11 may include an electronic circuit such as a register.
The storage unit 11 stores values of a plurality (hereinafter referred to as N) of state variables included in an Ising-type evaluation function. Note that the state variables may also be called decision variables. The Ising-type evaluation function (E(x)) is defined by, for example, a function in a quadratic form such as the following equation (1).
[Math. 1]

$$E(x) = -\sum_{i=1}^{N}\sum_{j>i}^{N} W_{ij}x_i x_j - \sum_{i=1}^{N} b_i x_i \qquad (1)$$

A first term on a right side is obtained by integrating products of values (0 or 1) of two state variables and a weight value (representing strength of correlation between the two state variables) for all combinations of the N state variables of the Ising model with neither an omission nor an overlap. A state variable with an identification number i is represented by $x_i$, a state variable with an identification number j is represented by $x_j$, and a weight value indicating magnitude of correlation between the state variables with the identification numbers i and j is represented by $W_{ij}$. A second term on the right side is obtained by summing up products of a bias coefficient and a state variable for each identification number. A bias coefficient for the identification number = i is represented by $b_i$.

Furthermore, the storage unit 11 stores values of a plurality of auxiliary variables ($x_k$) indicating presence or absence of violation of each of a plurality (hereinafter referred to as M) of constraint conditions. In the following description, description will be made assuming that $x_k$ has a value of 1 in the case of violating a constraint condition with the identification number = k and has a value of 0 in the case of satisfying the constraint condition, but the present disclosure is not limited to this. A spin variable having a value of -1 or +1 may also be used as $x_k$.

Furthermore, the storage unit 11 stores a total value (hereinafter referred to as total energy) of the value of the evaluation function described above and values of a plurality of constraint terms. The total energy (H(x)) may be expressed by, for example, the following equation (2).

[Math. 2]

$$H(x) = E(x) + \sum_{k \in M} \lambda_k g(h_k) \tag{2}$$

In the equation (2), a second term on a right side represents the overall magnitude (energy) of the plurality of constraint terms. An identification number of a constraint condition (or constraint term) is represented by k. Furthermore, $\lambda_k$ is a predetermined positive coefficient representing a weight of the constraint condition with the identification number k. Each constraint term is weighted by $\lambda_k$. A penalty function, which differs depending on a type of the constraint condition, is represented by $g(h_k)$. It may be said that $\lambda_k g(h_k)$ is one constraint term. A value used to specify the constraint violation amount for the constraint condition with the identification number k is represented by $h_k$.

In a case where the constraint condition is an inequality constraint, $g(h_k)$ in the equation (2) may be expressed by the following equation (3).

[Math. 3]

$$g(h_k) = max[0, h_k] \quad h_k = R_k - U_k = \sum_{i \in D} W_{ki} x_i - U_k \tag{3}$$

In the equation (3), max[0, $h_{k]}$ is a function that outputs the larger value of 0 and $h_k$. Furthermore, $R_k$ represents a consumption amount (also called resource amount) of the constraint term with the identification number k, and $U_k$ represents an upper limit of the resource amount. D represents a set of the identification numbers of the state variables. $W_{ki}$ is a coefficient (weight value) representing a weight of $x_i$ in the inequality constraint with the identification number k.

H(x) in the case where the constraint condition is the inequality constraint may be expressed by the following equation (4) using the auxiliary variable ($x_k$).

[Math. 4]

$$H(x) = E(x) + \sum_{k \in M} \lambda_k \left( \sum_{i \in D} W_{ki} x_i - U_k \right) x_k \tag{4}$$

Moreover, the storage unit 11 stores a first local field ($h_i$) representing a change amount of H(x) when each of the values of the N pieces of $x_i$ changes, and also stores $h_k$ described above. As described above, $h_k$ is a value used to specify the constraint violation amount for the constraint condition with the identification number k, and is also a value proportional to the change amount of H(x) when the value of $x_k$ changes. In FIG. 1, $h_k$ is indicated as a second local field.

Furthermore, the storage unit 11 stores $\lambda_k$ included in the equation (2) or (4) mentioned above. The storage unit 11 may further store a weight value between each of the N pieces of $x_i$, a weight value between any one of the N pieces of $x_i$ and each of the M pieces of $x_k$, and an increase amount $\Delta\lambda_{k+}$ and a decrease amount $\Delta\lambda_{k-}$ at the time of adjusting $\lambda_k$. Each of $\Delta\lambda_{k+}$ and $\Delta\lambda_{k-}$ may be set to a different value for each constraint condition. Furthermore, the storage unit 11 may store the bias coefficient ($b_i$) in the equation (1), and $U_k$ in the equation (3) or (4). Furthermore, the storage unit 11 may store various types of data such as calculation conditions when the processing unit 12 executes the data processing method to be described later. Furthermore, in a case where the processing unit 12 executes a part or all of processing of the data processing method to be described later by software, the storage unit 11 stores a program for executing the processing.

FIG. 2 is a diagram illustrating exemplary correlation between state variables and auxiliary variables.

Strength of the correlation between the N state variables may be represented by $W_{ij}$, which is N $\times$ N first weight values. For example, strength of the correlation between $x_1$ and $x_i$ is $W_{1i}$, strength of the correlation between $x_i$ and $x_N$ is $W_{iN}$, and strength of the correlation between $x_1$ and $x_N$ is $W_{1N}$. On the other hand, the correlation between the state variable and the auxiliary variable differs between the correlation based on the influence on the auxiliary variable exerted by a change in the state variable value and the correlation based on the influence on the state variable exerted by a change in the auxiliary variable. For example, as illustrated in FIG. 2, the influence on the auxiliary variable $x_k$ exerted by a change in the value of the state variable $x_i$ may be represented by the weight value $W_{ki}$, and the influence on the state variable $x_i$ exerted by a change in the value of the auxiliary variable $x_k$ may be represented by $-\lambda_k W_{ki}$ using the $\lambda_k$ described above.

The processing unit 12 in FIG. 1 may be implemented by, for example, a processor that is hardware such as a central processing unit (CPU), a graphics processing unit (GPU), a digital signal processor (DSP), or the like. Furthermore, the processing unit 12 may be implemented by an electronic circuit such as an application specific integrated circuit (ASIC), a field programmable gate array (FPGA), or the like.

The processing unit 12 searches for, for example, a state where H(x) expressed by the equation (4) is minimized. The state where the minimum value of local minimum values of H(x) is reached is to be an optimum solution. Note that the processing unit 12 may also search for a state where the value of H(x) is maximized (in this case, the state where the maximum value is reached is to be the optimum solution) by changing the signs of the individual terms on the right side of the equation (4).

In FIG. 1, an exemplary flow of the process performed by the processing unit 12 is illustrated.

Note that, here, it is assumed that values based on initial values of $x_1$ to $x_N$ are stored in the storage unit 11 as H(x), $h_i$, $h_k$, and $x_k$.

The processing unit 12 performs the following process of steps S1 to S4 at a time of searching for a solution based on an MCMC method. First, the processing unit 12 carries out a search process based on the MCMC method (MCMC search) (step S1). The search process includes processing of flip determination of a state variable (step S1a), update of $x_i$, $h_i$, $h_k$, and H(x) (step S1b), flip determination of an auxiliary variable (step S1c), and update of $x_k$, $h_i$, H(x) (step S1d).

The processing of step S1a is performed as follows, for example.

The processing unit 12 determines whether or not to permit a change in a value of a first state variable (hereinafter referred to as a flip candidate state variable) of the N pieces of $x_i$ based on $h_i$. For example, the processing unit 12 selects the flip candidate state variable at random or in a predetermined order. Here, $h_i$ may be expressed by the following equation (5).

[Math. 5]

$$h_i = \sum_{j \in D} W_{ij} x_j + b_i - \sum_{k \in M} \lambda_k W_{ki} x_k \qquad (5)$$

The processing unit 12 calculates a change amount ($\Delta$H) of H(x) in the case where the value of the flip candidate state variable changes. For example, $\Delta$H in the case where the value of $x_i$ changes may be calculated by the equation $\Delta H = -h_i \Delta x_i$ based on $h_i$ expressed by the equation (5).

Next, the processing unit 12 determines whether or not to permit a change in the value of the flip candidate state variable (whether or not flip is permissible) based on a result of comparison between $\Delta$H and a predetermined value. The predetermined value is, for example, a noise value obtained based on a random number and a value of a temperature parameter. For example, log(rand) $\times$ T, which is an example of a noise value obtained based on a uniform random number (rand) equal to or greater than 0 and equal to or smaller than 1 and a temperature parameter (T), may be used as the predetermined value. In this case, in a case of $-\Delta H_i \geq \log(\text{rand}) \times T$, the processing unit 12 determines that the change in the value of the flip candidate state variable is permitted (flip is permissible).

The processing of step S1b is performed as follows, for example.

When it is determined that the flip is permissible, the processing unit 12 updates $h_i$, $h_k$, H(x), and $x_i$ (state variables for which the flip is determined to be permissible). Note that the processing unit 12 does not update $h_i$, $h_k$, H(x), and $x_i$ unless it is determined that the flip is permissible. The processing unit 12 updates H(x) by adding $\Delta$H to the original H(x). Furthermore, for example, when it is determined that the flip is permissible for $x_j$, the processing unit 12 updates $h_i$ by adding $\Delta h_i = W_{ij} \Delta x_j$ to the original $h_i$ for each of the N state variables. Moreover, when it is determined that the flip is permissible for $x_j$, the processing unit 12 updates $h_k$ by adding $\Delta h_k = W_{kj} \Delta x_j$ to the original $h_k$ for each of the M auxiliary variables. In a case where violation of the constraint condition of the identification number = k occurs when the value of $x_j$ is changed, $h_k$ becomes a positive value by this update, and a change in $x_k$ from 0 to 1 is permitted by the processing of step S1c to be described later.

The processing of step S1c is performed as follows, for example.

The processing unit 12 determines whether or not to permit a change in a value of a first auxiliary variable (hereinafter referred to as a flip candidate auxiliary variable) of the M pieces of $x_k$ based on $h_k$. For example, the processing unit 12 selects the flip candidate auxiliary variable at random or in a predetermined order. Here, $h_k$ may be expressed by the following equation (6).

[Math. 6]

$$h_k = \sum_{\substack{i \in D \\ k \in M}} W_{ki} x_i - U_k \tag{6}$$

The processing unit 12 calculates a change amount (ΔH) of H(x) in the case where the value of the flip candidate state variable changes. For example, ΔH in the case where the value of $x_i$ changes may be calculated by the equation $\Delta H = -h_i \Delta x_i$ based on $h_i$ expressed by the equation (5).

The processing unit 12 calculates ΔH in the case where the value of the flip candidate auxiliary variable changes. For example, ΔH in the case where the value of $x_k$ changes may be calculated by the equation $\Delta H = +\lambda_k h_k \Delta x_k$ using $h_k$ expressed by the equation (6). Although an error may occur depending on whether or not the value of the auxiliary variable changes in the processing of step S1a described above as ΔH is calculated without changing the value of the auxiliary variable, the error may be corrected by $\Delta H = +\lambda_k h_k \Delta x_k$ obtained by the processing of step S1c.

Next, the processing unit 12 determines whether or not to permit a change in the value of the flip candidate auxiliary variable (whether or not flip is permissible) based on a result of comparison between ΔH and a predetermined value. The predetermined value may be the same as the value used in the processing of step S1a, or may be a fixed value (e.g., 0). In a case of using log(rand) × T as the predetermined value, the processing unit 12 determines that the flip is permissible for the flip candidate auxiliary variable when ΔH > log(rand) × T. In a case where constraint violation is caused by the change in the value of the state variable according to the processing of step S1b, $h_k$ in the equation (6) becomes a positive value, and a change amount $\Delta x_k = 1$ when $x_k$ changes from 0 to 1, and thus ΔH is a positive value. Furthermore, log(rand) × T is a negative value. Thus, $x_k$ is permitted to change from 0 to 1 by using the determination expression ΔH > log(rand) × T.

The processing of step S1d is performed as follows, for example.

When it is determined that the flip is permissible for the flip candidate $x_k$, the processing unit 12 updates $h_i$, H(x), and $x_k$ (auxiliary variables for which the flip is determined to be permissible). Note that the processing unit 12 does not update $h_i$, H(x), and $x_k$ unless it is determined that the flip is permissible.

The processing unit 12 updates H(x) by adding ΔH to the original H(x). Furthermore, for example, when it is determined that the flip is permissible for $x_k$, the processing unit 12 updates $h_i$ by adding $\Delta h_i = -\lambda_k W_{ki} \Delta x_k$ to the original $h_i$ for each of the N state variables.

Note that the processing unit 12 may repeat the processing of steps S1a and S1b a predetermined number of times, and then perform the processing of steps S1c and S1d. Furthermore, the processing unit 12 may not perform the processing of steps S1c and S1d until it is determined that the flip is permissible for the flip candidate state variable in the processing of step S1a and the update is carried out in the processing of step S1b.

After performing the search process as described above, the processing unit 12 determines whether or not a $\lambda_k$ adjustment period is reached (step S2). The processing unit 12 determines that the adjustment period is reached each time the search process described above is performed a predetermined number of times. If it is determined that the adjustment period is reached, the processing unit 12 performs $\lambda_k$ adjustment processing (step S3), and repeats the process from step S1 if it is determined that the adjustment period is not reached.

In the processing of step S3, the processing unit 12 adjusts $\lambda_k$ based on H(x) or the presence or absence of constraint condition violation. For example, if H(x) at the time of $\lambda_k$ adjustment is equal to or greater than $H_{best}$, the processing unit 12 decreases the value of $h_k$ ($h_k$ in all or a designated range) of each of the plurality of constraint conditions. $H_{best}$ is the minimum value of H(x) in the state where no constraint condition is violated, which is obtained before the adjustment described above. If H(x) at the $\lambda_k$ adjustment timing is smaller than $H_{best}$ and there is a constraint condition in which constraint condition violation occurs, the processing unit 12 increases the value of $\lambda_k$ of the constraint condition. The $\lambda_k$ adjustment is carried out by, for example, adding $\Delta\lambda_{k+}$ to $\lambda_k$ or subtracting $\Delta\lambda_{k-}$ from $\lambda_k$. For example, a value 0.1 times the original $\lambda_k$ or the like is appropriately set as the value of $\Delta\lambda_{k+}$ or $\Delta\lambda_{k-}$.

Note that the values of $\Delta\lambda_{k+}$ and $\Delta\lambda_{k-}$ and the initial value of $\lambda_k$ may be changed during the MCMC search. Furthermore, a method of the $\lambda_k$ adjustment is not limited to the method described above, and the processing unit 12 may multiply $\lambda_k$ by a predetermined value (e.g., 1.1 or 0.9) to make adjustment.

When the $\lambda_k$ adjustment is carried out, the processing unit 12 corrects $h_i$ and H(x) (step S4). The correction of

$h_i$ may be carried out based on the following equation (7).
[Math. 7]

$$h_i = h_i - \sum_{\substack{k \in M \\ W_{ki} \neq 0}} \Delta\lambda_k W_{ki} x_k \quad (7)$$

The correction of H(x) may be carried out based on the following equation (8).
[Math. 8]

$$H(x) = H(x) + \sum_{k \in M} \Delta\lambda_k \left( \sum_{\substack{i \in N \\ k \in M}} W_{ki} x_i - U_k \right) x_k \quad (8)$$

In the equations (7) and (8), $\Delta\lambda_k$ represents an adjustment amount of $\lambda_k$, and is $\Delta\lambda_{k+}$ or $\Delta\lambda_{k-}$ described above.
Note that the correction of $h_i$ and H(x) may be carried out based on the following equations (9) and (10) without using $x_k$.
[Math. 9]

$$h_i = h_i - \sum_{\substack{i \in N \\ k \in M \\ W_{ki} \neq 0}} \Delta\lambda_k \Delta x_i (max[0, h_i + W_{ki} \Delta x_i] - max[0, h_k]) \quad (9)$$

[Math. 10]

$$H(x) = H(x) + \sum_{k \in M} \Delta\lambda_k max[0, h_k] \quad (10)$$

After the processing of step S4, the process from step S1 is repeated.
Note that, while the example of selecting the flip candidate state variable one by one from among the N state variables and performing the processing of steps S1a and S1b has been described in the descriptions above, the processing of steps S1a and S1b may be performed in parallel for a plurality of (e.g., all the N pieces of) state variables. In that case, when there is a plurality of state variables whose values are permitted to change, the processing unit 12 selects a state variable whose value is to be changed at random or according to a predetermined rule.
Likewise, while the example of selecting the flip candidate auxiliary variable one by one from among the M auxiliary variables and performing the processing of step S1c and S1d has been described in the descriptions above, the processing of steps S1c and S1d may be performed in parallel for a plurality of (e.g., all the M pieces of) auxiliary variables. In that case, when there is a plurality of auxiliary variables whose values are permitted to change, the processing unit 12 selects an auxiliary variable whose value is to be changed at random or according to a predetermined rule.
In a case of performing simulated annealing, for example, the processing unit 12 decreases the value of the temperature parameter (T) described above according to a predetermined temperature parameter change schedule each time the flip determination for a state variable is repeated a predetermined number of times. Then, the processing unit 12 outputs a state obtained when the flip determination is repeated the predetermined number of times as a calculation result of a combinatorial optimization problem (e.g., displays it on a display device (not illustrated)). Note that the processing unit 12 may cause the storage unit 11 to retain $H_{best}$ and the state when $H_{best}$ is obtained. In that case, the processing unit 12 may output, as a calculation result, the state corresponding to $H_{best}$ stored after the flip determination is repeated the predetermined number of times.
In a case where the processing unit 12 performs a replica exchange method, the processing unit 12 repeats the process of steps S1 to S4 described above for each of a plurality of replicas to which each different T value is set.

Then, the processing unit 12 carries out replica exchange each time the flip determination for a state variable is repeated a predetermined number of times. For example, the processing unit 12 selects two replicas having adjacent T values, and exchanges the values of the respective state variables and the values of the respective auxiliary variables between the selected two replicas at a predetermined exchange probability based on an energy difference or a T value difference between the replicas. Note that the T values may be exchanged between the two replicas instead of the values of the respective state variables and the values of the respective auxiliary variables. Alternatively, the processing unit 12 causes the storage unit 11 to retain $H_{best}$ and the state when $H_{best}$ is obtained. Then, the processing unit 12 outputs, as a calculation result, the state corresponding to the smallest $H_{best}$ in all the replicas among the pieces of $H_{best}$ stored after the flip determination described above is repeated the predetermined number of times in the individual replicas.

According to the data processing device 10 and the data processing method as described above, the processing unit 12 adjusts $\lambda_k$ based on H(x) or the presence or absence of constraint condition violation each time the search process is performed the predetermined number of times. As a result, $\lambda_k$ may be appropriately adjusted by reflecting the solution search condition, and accordingly, the efficiency in searching for a solution to the combinatorial optimization problem may improve.

For example, in a case where the value of H(x) is not improved (in a case where the value is not decreased) even when the search process is repeated the predetermined number of times, it is conceivable that the increase in energy when constraint violation occurs is too large so that the state transition is blocked to lower the search efficiency. In such a case, the state transition is promoted to improve the search efficiency when the value of $\lambda_k$ is decreased. In a case where violation of a certain constraint condition occurs while the value of H(x) is improved, it becomes possible to suppress the occurrence of the violation of the constraint condition by increasing the value of $\lambda_k$ related to the constraint condition. That is, it becomes possible to lower the possibility of the occurrence of the constraint violation solution, and to suppress the deterioration of the search efficiency.

Furthermore, when $\lambda_k$ is adjusted, $h_i$ and H(x) are corrected based on the adjustment amount of $\lambda_k$, whereby the occurrence of a calculation error caused by changing of $\lambda_k$ may be suppressed.

(Second Embodiment)

FIG. 3 is a block diagram illustrating exemplary hardware of a data processing device according to a second embodiment.

A data processing device 20 is, for example, a computer, and includes a processor 21, a RAM 22, an HDD 23, a GPU 24, an input interface 25, a medium reader 26, and a communication interface 27. The units described above are coupled to a bus.

The processor 21 is a processor such as a GPU, a CPU, or the like including an arithmetic circuit that executes a program command. The processor 21 loads at least a part of a program and data stored in the HDD 23 into the RAM 22, and executes the program. Note that the processor 21 may include a plurality of processor cores. Furthermore, the data processing device 20 may include a plurality of processors. Note that a set of the plurality of processors (multiprocessor) may be called a "processor".

The RAM 22 is a volatile semiconductor memory that temporarily stores the program to be executed by the processor 21 and data to be used by the processor 21 for arithmetic operations. Note that the data processing device 20 may include a memory of a type different from the RAM 22, or may include a plurality of memories.

The HDD 23 is a non-volatile storage device that stores programs of software such as an operating system (OS), middleware, application software, and the like, and data. The programs include, for example, a program for causing the data processing device 20 to perform a process of searching for a solution to a combinatorial optimization problem. Note that the data processing device 20 may include another type of the storage device such as a flash memory, a solid state drive (SSD), or the like, or may include a plurality of non-volatile storage devices.

The GPU 24 outputs an image to a display 24a coupled to the data processing device 20 in accordance with a command from the processor 21. As the display 24a, a cathode ray tube (CRT) display, a liquid crystal display (LCD), a plasma display panel (PDP), an organic electro-luminescence (OEL) display, or the like may be used.

The input interface 25 obtains input signals from an input device 25a coupled to the data processing device 20, and outputs them to the processor 21. As the input device 25a, a pointing device such as a mouse, a touch panel, a touch pad, or a trackball, a keyboard, a remote controller, a button switch, or the like may be used. Furthermore, a plurality of types of input devices may be coupled to the data processing device 20.

The medium reader 26 is a reading device that reads a program and data recorded on a recording medium 26a. As the recording medium 26a, for example, a magnetic disk, an optical disk, a magneto-optical disk (MO), a semiconductor memory, or the like may be used. Examples of the magnetic disk include a flexible disk (FD) and an HDD. Examples of the optical disk include a compact disc (CD) and a digital versatile disc (DVD).

The medium reader 26 copies, for example, a program or data read from the recording medium 26a to another recording medium such as the RAM 22 the HDD 23, or the like. The read program is executed by, for example, the processor 21. Note that the recording medium 26a may be a portable recording medium, and may be used for distribution of the program or data. Furthermore, the recording medium 26a and the HDD 23 may be referred to as computer-readable recording media.

The communication interface 27 is an interface that is coupled to a network 27a and communicates with another information processing device via the network 27a. The communication interface 27 may be a wired communication interface coupled to a communication device such as a switch by a cable, or may be a wireless communication interface coupled to a base station by a wireless link.

Next, functions and processing procedures of the data processing device 20 will be described.

FIG. 4 is a block diagram illustrating exemplary functions of the data processing device.

The data processing device 20 includes an input unit 31, a control unit 32, a search unit 33, and an output unit 34. With those units, processing similar to the processing performed by the processing unit 12 illustrated in FIG. 1 is performed. Note that the various types of information stored in the storage unit 11 illustrated in FIG. 1 are stored in, for example, various holding units to be described later included in the search unit 33 or the like.

The input unit 31, the control unit 32, the search unit 33, and the output unit 34 may be implemented using, for example, a program module to be executed by the processor 21 or a storage area (register or cache memory) in the processor 21. Note that the search unit 33 may be further implemented by using a storage area secured in the RAM 22 or the HDD 23.

The input unit 31 receives, for example, input of initial values of N state variables, initial values of M auxiliary variables, problem information, and calculation conditions. The problem information includes, for example, $W_{ki}$, and $U_k$ in the equation (4) or the like in addition to $W_{ij}$ and $b_i$ in the equation (1). The calculation conditions include, for example, the number of replicas, a replica exchange cycle, and a value of a temperature parameter set for each replica in a case of executing a replica exchange method, a temperature parameter change schedule in a case of performing simulated annealing, calculation end conditions, and the like. Moreover, the calculation conditions include a parameter for adjusting $\lambda_k$.

Examples of the parameter for adjusting $\lambda_k$ include an initial value of $\lambda_k$ ($\lambda_{kinit}$), an increase amount ($\Delta\lambda_{k+}$) and a decrease amount ($\Delta\lambda_{k-}$) of $\lambda_k$,a variable (T1) indicating an interval for setting $\lambda_{kinit}$, $\Delta\lambda_{k+}$, and $\Delta\lambda_{k-}$, and a variable (T0) indicating an adjustment interval of $\lambda_k$. Note that T1 > T0 is satisfied.

Those pieces of information may be input by an operation of the input device 25a made by a user, or may be input via the recording medium 26a or the network 27a.

The control unit 32 controls each unit of the data processing device 20 to execute processing to be described later.

The search unit 33 repeats an MCMC search under the control of the control unit 32, thereby searching for a state where a value (energy) of an evaluation function is minimized.

The output unit 34 outputs a search result (calculation result) by the search unit 33.

For example, the output unit 34 may output the calculation result to the display 24a to be displayed, transmit the calculation result to another information processing device via the network 27a, or store the calculation result in an external storage device.

The search unit 33 includes a variable setting unit 33a, a state variable holding unit 33b, an auxiliary variable holding unit 33c, a weight value holding unit 33d, and a $\lambda_k$ adjustment unit 33e. Moreover, the search unit 33 includes an $h_i$ calculation unit 33f, an $h_k$ calculation unit 33g, $\Delta$H calculation units 33h and 33i, a transition propriety determination units 33j and 33k, a selection unit 33l, an update unit 33m, and an energy calculation unit 33n.

The variable setting unit 33a retains various variables ($\lambda_k$, parameters for adjusting $\lambda_k$ described above, etc.) received by the input unit 31, and sets them in the individual units. The variable setting unit 33a may retain H(x), $H_{best}$, and the like to be used to determine whether to increase or decrease $\lambda_k$.

The state variable holding unit 33b retains N state variables ($x_i$). Furthermore, the state variable holding unit 33b outputs a change amount ($\Delta x_i$) of $x_i$ of a flip candidate.

The auxiliary variable holding unit 33c retains M auxiliary variables.

The weight value holding unit 33d retains weight values ($W_{ij}$) between the N state variables and weight values ($W_{ki}$) between each of the N state variables and the M auxiliary variables. $W_{ij}$ may be represented by a matrix of N rows and N columns, and $W_{ki}$ may be represented by a matrix of M rows and N columns. Note that it is not needed to retain weight values between state variables that does not affect any of the M auxiliary variables among the N state variables and the M auxiliary variables.

The $\lambda_k$ adjustment unit 33e adjusts the value of $\lambda_k$ based on the value of H(x) or $x_k$ (presence or absence of constraint condition violation) each time the search process (MCMC process) is performed T0 times. The $\lambda_k$ adjustment unit 33e supplies the adjusted $\lambda_k$ to the variable setting unit 33a, and supplies the adjustment amount ($\Delta\lambda_k$) to the $h_i$ calculation unit 33f and the update unit 33m.

The $h_i$ calculation unit 33f retains N pieces of $h_i$, and updates $h_i$ according to changes in values of the state variables and the auxiliary variables. Furthermore, when $\lambda_k$ is adjusted, the $h_i$ calculation unit 33f corrects $h_i$ according

to the equation (7), for example.

The $h_k$ calculation unit 33g retains M pieces of $h_k$ and updates $h_k$ according to changes in values of the state variables.

The $\Delta H$ calculation unit 33h calculates $\Delta H = -h_i \Delta x_i$ based on $h_i$ for $x_i$ of a flip candidate.

The $\Delta H$ calculation unit 33i calculates $\Delta H = +\lambda_k h_k \Delta x_k$ based on $h_k$ for $x_k$ of a flip candidate.

The transition propriety determination unit 33j performs flip determination processing to determine whether or not to permit a change in the value of the flip candidate state variable based on a result of comparison between $\Delta H$ output by the $\Delta H$ calculation unit 33h and a predetermined value. The predetermined value is, for example, a noise value obtained based on a random number and a value of a temperature parameter. For example, in a case of $-\Delta H \geq \log(\text{rand}) \times T$, the transition propriety determination unit 33j determines that the change in the value of the flip candidate state variable is permissible.

The transition propriety determination unit 33k performs flip determination processing to determine whether or not to permit a change in the value of the flip candidate auxiliary variable based on a result of comparison between $\Delta H$ output by the $\Delta H$ calculation unit 33i and a predetermined value. The predetermined value may be the same as the value used by the transition propriety determination unit 33j, or may be a fixed value (e.g., 0). For example, in a case of $\Delta H > \log(\text{rand}) \times T$, the transition propriety determination unit 33k determines that the change in the value of the flip candidate auxiliary variable is permissible.

The selection unit 33l selects a determination result of the transition propriety determination unit 33j in the case of performing the flip determination for a state variable, and selects a determination result of the transition propriety determination unit 33k in the case of performing the flip determination for an auxiliary variable, and outputs the determination result.

The update unit 33m transmits the identification number of the state variable for which the flip is determined to be permissible to the state variable holding unit 33b, and changes the value of the state variable. Furthermore, the update unit 33m transmits the identification number of the auxiliary variable for which the flip is determined to be permissible to the auxiliary variable holding unit 33c, and changes the value of the auxiliary variable.

Moreover, when it is determined that the flip is permissible for the flip candidate state variable, the update unit 33m causes the $h_i$ calculation unit 33f and the $h_k$ calculation unit 33g to update the N pieces of $h_i$ and the M pieces of $h_k$. When it is determined that the flip is permissible for the flip candidate auxiliary variable, the update unit 33m causes the $h_i$ calculation unit 33f to update the N pieces of $h_i$.

Furthermore, when it is determined that the flip is permissible for the state variable or the auxiliary variable, the update unit 33m causes the energy calculation unit 33n to update H(x). Furthermore, when $\lambda_k$ is adjusted, the update unit 33m supplies $\Delta\lambda_k$ to the energy calculation unit 33n to correct H(x).

The energy calculation unit 33n retains H(x), and updates H(x) when an update instruction is issued from the update unit 33m. Moreover, when an H(x) correction instruction is issued from the update unit 33m, the energy calculation unit 33n corrects H(x) based on $\Delta\lambda_k$ according to, for example, the equation (8). Note that $h_k$ expressed by the equation (6) may be used as a value in the parentheses of the second term on the right side of the equation (8).

Furthermore, the energy calculation unit 33n retains $H_{best}$, and in a case where the updated H(x) is smaller than $H_{best}$ and no constraint condition violation occurs when the H(x) is obtained, it sets the H(x) as a new $H_{best}$.

FIG. 5 is a diagram illustrating an example of the variable setting unit and the $\lambda_k$ adjustment unit.

The variable setting unit 33a includes a $\lambda_k$ adjustment parameter holding unit 33a1, a state holding unit 33a2, an energy holding unit 33a3, and a $\lambda_k$ holding unit 33a4. The $\lambda_k$ adjustment parameter holding unit 33a1, the state holding unit 33a2, the energy holding unit 33a3, and the $\lambda_k$ holding unit 33a4 may be implemented using a storage circuit such as a register.

The $\lambda_k$ adjustment unit 33e includes a $\lambda_k$ adjustment determination unit 33e1, a $\lambda_k$ adjustment amount setting unit 33e2, and a $\lambda_k$ setting unit 33e3.

The $\lambda_k$ adjustment parameter holding unit 33a1 retains T0, T1 (> 0), $\lambda_{kinit}$, $\Delta\lambda_{k+}$, and $\Delta\lambda_{k-}$. The $\lambda_k$ adjustment parameter holding unit 33a1 supplies T0 to the $\lambda_k$ adjustment determination unit 33e1, and supplies T1, $\lambda_{kinit}$, $\Delta\lambda_{k+}$, and $\Delta\lambda_{k-}$ to the $\lambda_k$ adjustment amount setting unit 33e2.

The state holding unit 33a2 retains the values of the state variables and the auxiliary variables. When an identification number i of the state variable for which the flip is determined to be permissible is received from the update unit 33m, the state holding unit 33a2 changes the value of the state variable ($x_i$) corresponding to the identification number i. When an identification number k of the auxiliary variable for which the flip is determined to be permissible is received from the update unit 33m, the state holding unit 33a2 changes the value of the auxiliary variable ($x_k$) corresponding to the identification number k. The state holding unit 33a2 supplies the M pieces of $x_k$ to the $\lambda_k$ setting unit 33e3.

The energy holding unit 33a3 receives H(x) and $H_{best}$ from the energy calculation unit 33n, and retains them. The energy holding unit 33a3 supplies H(x) and $H_{best}$ to the $\lambda_k$ setting unit 33e3.

The $\lambda_k$ holding unit 33a4 retains the initial value of $\lambda_k$ in all the constraint conditions. Thereafter, the $\lambda_k$ holding unit 33a4 retains $\lambda_k$ ($k \in M$) obtained by the $\lambda_k$ setting unit 33e3 at the $\lambda_k$ adjustment timing.

The $\lambda_k$ adjustment determination unit 33e1 determines that the $\lambda_k$ adjustment timing is reached each time the MCMC search is carried out T0 times.

The $\lambda_k$ adjustment amount setting unit 33e2 sets $\lambda_{kinit}$, $\Delta\lambda_{k+}$, and $\Delta\lambda_{k-}$ in the $\lambda_k$ setting unit 33e3 each time the MCMC search is carried out T1 times. As a result, $\lambda_k$ is initialized.

The $\lambda_k$ setting unit 33e3 compares H(x) with $H_{best}$. When H(x) is equal to or greater than $H_{best}$, the $\lambda_k$ setting unit 33e3 subtracts $\Delta\lambda_{k-}$ from the $\lambda_k$ values in all or a designated range. Note that $\lambda_k$ is retained in the $\lambda_k$ holding unit 33a4. When H(x) is smaller than $H_{best}$ and there is a constraint condition in which constraint condition violation occurs, the $\lambda_k$ setting unit 33e3 adds $\Delta\lambda_{k+}$ to the value of $\lambda_k$ (retained in the $\lambda_k$ holding unit 33a4) of the constraint condition. The $\lambda_k$ setting unit 33e3 outputs, as $\Delta\lambda_{k+}$ the value used for the $\lambda_k$ adjustment out of $\Delta\lambda_{k-}$ and $\Delta\lambda_{k+}$.

FIG. 6 is a diagram illustrating an exemplary update and correction process of a local field.

Note that, in the example of FIG. 6, description will be made assuming that a flip candidate state variable is $x_j$ and a flip candidate auxiliary variable is $x_k$. In this case, $\Delta x_j$ is output from the state variable holding unit 33b in synchronization with a clock signal $clk_D$ supplied from the control unit 32, and $\Delta x_k$ is output from the auxiliary variable holding unit 33c in synchronization with a clock signal $clk_A$ supplied from the control unit 32.

Furthermore, when it is determined that the flip is permissible for $x_j$, N pieces of $W_{ij}$, which are weight values between $x_j$ and the individual N state variables, and M pieces of $W_{kj}$, which are weight values between $x_j$ and the individual M auxiliary variables, are read from the weight value holding unit 33d. Furthermore, when it is determined that the flip is permissible for $x_k$, N pieces of $W_{ki}$, which are weight values between $x_k$ and the individual N state variables, are read from the weight value holding unit 33d.

The $h_i$ calculation unit 33f includes multipliers 33f1, 33f2, 33f3, 33f4, and 33f5, and an $h_i$ update holding unit 33f6.

The $h_k$ calculation unit 33g includes a multiplier 33g1 and an $h_k$ update holding unit 33g2.

The multiplier 33f1 outputs a product of $\Delta x_j$ and the N pieces of $W_{ij}$. The multiplier 33f2 outputs a product of $\Delta x_k$ and the N pieces of $W_{ki}$. The multiplier 33f3 outputs a product of each of the output values of the multiplier 33f2 and $\lambda_k$ read from the variable setting unit 33a. The multiplier 33f4 outputs a product of $\Delta\lambda_k$ and $x_k$. The multiplier 33f5 outputs a product of the output value of the multiplier 33f4 and the N pieces of $W_{ki}$. The multiplier 33g1 outputs a product of $\Delta x_j$ and the M pieces of $W_{kj}$.

The $h_i$ update holding unit 33f6 retains the N pieces of $h_i$. Then, when it is determined that the flip is permissible for $x_j$, the $h_i$ update holding unit 33f6 adds $\Delta h_i = W_{ij}\Delta x_j$ to each of the N pieces of $h_i$, thereby updating $h_i$. Furthermore, when it is determined that the flip is permissible for $x_k$, the $h_i$ update holding unit 33f6 adds $\Delta h_i = -\lambda_k W_{ki}\Delta x_k$ to each of the N pieces of $h_i$, thereby updating $h_i$.

Moreover, when the $\lambda_k$ adjustment is carried out, the $h_i$ update holding unit 33f6 corrects the N pieces of $h_i$ according to the equation (7) using $\Delta\lambda_k W_{ki} x_k$, which is the output value of the multiplier 33f5.

The $h_k$ update holding unit 33g2 retains the M pieces of $h_k$. Then, when it is determined that the flip is permissible for $x_j$, the $h_k$ update holding unit 33g2 adds $\Delta h_k = W_{kj}\Delta x_j$ to each of the M pieces of $h_k$, thereby updating $h_k$.

Hereinafter, an exemplary processing procedure (data processing method) of the data processing device 20 will be described.

FIG. 7 is a flowchart illustrating an exemplary flow of the data processing method.

Step S10: The input unit 31 receives input of initial values of the N state variables, initial values of the M auxiliary variables, problem information, and calculation conditions.

Step S11: The control unit 32 carries out an initialization process. In the initialization process, for example, the following processing is performed. The control unit 32 causes the variable setting unit 33a and the state variable holding unit 33b to retain the initial values of the N state variables, and causes the variable setting unit 33a and the auxiliary variable holding unit 33c to retain the initial values of the M auxiliary variables. Furthermore, the control unit 32 causes the weight value holding unit 33d to retain the weight value included in the problem information, and causes the variable setting unit 33a to retain the parameter for adjusting $\lambda_k$ of the calculation conditions.

Moreover, the control unit 32 calculates an initial value of $h_i$ expressed by the equation (5) and an initial value of $h_k$ expressed by the equation (6) based on the initial values of the N state variables, the initial values of the M auxiliary variables, and the problem information. The control unit 32 causes the $h_i$ update holding unit 33f6 illustrated in FIG. 6 to retain the calculated initial values of the N pieces of $h_i$, and causes the $h_k$ update holding unit 33g2 illustrated in FIG. 6 to retain the calculated initial values of the M pieces of $h_k$.

Furthermore, the control unit 32 calculates an initial value of H(x) expressed by the equation (4), for example, based on the initial values of the N state variables, the initial values of the M auxiliary variables, and the problem information. The control unit 32 causes the energy holding unit 33a3 illustrated in FIG. 5 to retain the calculated initial value of H(x).

Moreover, in the initialization process, the number of replicas = R and the like are set in the variable setting unit 33a.

Step S12: The control unit 32 sets t = 0. Here, t is a variable representing the number of MCMC searches. In the following example, it is assumed that the number of MCMC searches is counted as one when the MCMC search is carried out for each of the N state variables.

Step S13: The control unit 32 sets r = 0. Here, r is a variable representing a replica number.

Step S14: The control unit 32 sets i = 1. Here, i is an identification number of the state variable.

Step S15: The $\lambda_k$ adjustment amount setting unit 33e2 of the $\lambda_k$ adjustment unit 33e determines whether or not the variable (T1) indicating the interval for setting $\lambda_{kinit}$,$\Delta\lambda_{k+}$, and $\Delta\lambda_{k-}$ is divisible by t (whether or not (t%T1) = 0). Processing of step S16 is performed if it is determined that (t%T1) = 0 holds, and processing of step S17 is performed if it is determined that t%T1 = 0 does not hold.

Step S16: The $\lambda_k$ adjustment amount setting unit 33e2 sets $\lambda_{kinit}$, $\Delta\lambda_{k+}$, and $\Delta\lambda_{k-}$ of the replica with the replica number = r (hereinafter referred to as a replica r) for the $\lambda_k$ setting unit 33e3. As a result, $\lambda_k$ is initialized to $\lambda_{kinit}$. Note that the values of $\Delta\lambda_{k+}$ and $\Delta\lambda_{k-}$ may be changed.

Step S17: The search unit 33 carries out the MCMC search. A processing procedure of the MCMC search will be described later (see FIG. 8).

Step S18: The $\lambda_k$ adjustment determination unit 33e1 of the $\lambda_k$ adjustment unit 33e determines whether or not the variable (T0) indicating the adjustment interval of $\lambda_k$ is divisible by t (whether or not (t%T0) = 0). Processing of step S19 is performed if it is determined that t%T0 = 0 holds, and processing of step S26 is performed if it is determined that t%T0 = 0 does not hold.

Step S19: The $\lambda_k$ setting unit 33e3 of the $\lambda_k$ adjustment unit 33e determines whether or not $H < H_{best}$ holds. Processing of step S20 is performed if it is determined that $H < H_{best}$ holds, and processing of step S24 is performed if it is determined that $H<H_{best}$ does not hold.

Step S20: The $\lambda_k$ setting unit 33e3 determines whether or not $x_k = 1$ holds. Processing of step S21 is performed if it is determined that $x_k = 1$ holds, and processing of step S23 is performed if it is determined that $x_k = 1$ does not hold.

Step S21: The $\lambda_k$ setting unit 33e3 adjusts $\lambda_k$ by adding $\Delta\lambda_{k+}$ to the original $\lambda_k$.

Step S22: The control unit 32 determines whether or not k = M holds. Processing of step S25 is performed if it is determined that k = M holds, and processing of step S23 is performed if it is determined that k = M does not hold.

Step S23: The control unit 32 sets k = k + 1. Thereafter, the process from step S20 is repeated.

Step S24: The $\lambda_k$ setting unit 33e3 adjusts $\lambda_k$ by, for example, subtracting $\Delta\lambda_{k-}$ from all the pieces of $\lambda_k$.

Step S25: Correction of $h_i$ and H(x) is carried out. For example, the $h_i$ update holding unit 33f6 corrects the N pieces of $h_i$ according to the equation (7). The energy calculation unit 33n corrects H(x) according to, for example, the equation (8).

Step S26: The control unit 32 determines whether or not i = N holds. Processing of step S28 is performed if it is determined that i = N holds, and processing of step S27 is performed if it is determined that i = N does not hold.

Step S27: The control unit 32 sets i = i + 1. Thereafter, the process from step S15 is repeated.

Step S28: The control unit 32 determines whether or not r = R - 1 holds. Processing of step S30 is performed if it is determined that r = R - 1 holds, and processing of step S29 is performed if it is determined that r = R - 1 does not hold.

Step S29: The control unit 32 sets r = r + 1. Thereafter, the process from step S14 is repeated.

Step S30: The control unit 32 determines whether or not an end condition is satisfied. For example, the control unit 32 determines that the end condition is satisfied if the number of MCMC searches (t) reaches the maximum number or if H(x) becomes equal to or smaller than predetermined magnitude. Processing of step S32 is performed if it is determined that the process satisfies the predetermined end condition, and processing of step S31 is performed if it is determined that the process does not satisfy the predetermined end condition.

Step S31: The control unit 32 sets t = t + 1. Thereafter, the process from step S13 is repeated.

Step S32: The output unit 34 outputs a calculation result. This terminates the process. For example, the output unit 34 may output the calculation result to the display 24a to be displayed, transmit the calculation result to another information processing device via the network 27a, or store the calculation result in an external storage device.

Note that, in the case of performing the simulated annealing, for example, the control unit 32 decreases the value of the temperature parameter (T) described above according to a predetermined temperature parameter change schedule each time the MCMC search for the state variable is repeated a predetermined number of times. Then, under the control of the control unit 32, the output unit 34 outputs, as a calculation result, a state corresponding to the minimum value of $H_{best}$ of the individual replicas obtained when the MCMC search is repeated the maximum number of times, for example.

In the case of performing the replica exchange method, replica exchange is carried out each time the MCMC search is repeated a predetermined number of times. For example, the control unit 32 selects two replicas having adjacent T values, and exchanges the T values or the values of the respective state variables and the values of the respective auxiliary variables between the selected two replicas at a predetermined exchange probability based on an H(x) difference or a T value difference between the replicas. Then, under the control of the control unit 32, the output unit 34 outputs, as a calculation result, a state corresponding to the minimum value of $H_{best}$ of the individual replicas obtained when the MCMC search is repeated the maximum number of times, for example.

FIG. 8 is a flowchart illustrating an exemplary flow of a processing procedure of the MCMC search.

Step S40: A flip candidate state variable ($x_i$) is selected. When the flip candidate state variable is selected, a change amount ($\Delta x_i$) when a value of the state variable is changed is output from the state variable holding unit 33b.

Step S41: The $\Delta H$ calculation unit 33h of the search unit 33 calculates $\Delta H$ by the equation $\Delta H = -h_i \Delta x_i$.

Step S42: The transition propriety determination unit 33j of the search unit 33 performs flip determination for $x_i$ based on a result of comparison between $\Delta H$ and the predetermined value described above. Processing of step S43 is performed if it is determined that a change in $x_i$ is permissible (in a case where "flip is permissible"), and one MCMC search is terminated if it is determined that a change in $x_i$ is not permissible (in a case where "flip is not permissible").

Step S43: The search unit 33 updates $h_i$, $h_k$, H(x), and $x_i$ by the processing described above.

Step S44: The control unit 32 sets k = 1.

Step S45: A flip candidate auxiliary variable ($x_k$) is selected. When the flip candidate auxiliary variable is selected, a change amount ($\Delta x_k$) when a value of the auxiliary variable is changed is output from the auxiliary variable holding unit 33c.

Step S46: The $\Delta H$ calculation unit 33i of the search unit 33 calculates $\Delta H$ by the equation $\Delta H = +\lambda_k h_k \Delta x_k$.

Step S47: The transition propriety determination unit 33k of the search unit 33 performs flip determination for $x_k$ based on a result of comparison between $\Delta H$ and the predetermined value described above, for example. Processing of step S48 is performed if it is determined that a change in $x_k$ is permissible (in a case where "flip is permissible"), and processing of step S49 is performed if it is determined that a change in $x_k$ is not permissible (in a case where "flip is not permissible").

Step S48: The search unit 33 updates $h_i$, H(x), and $x_k$ by the processing described above.

Step S49: The control unit 32 determines whether or not k = M holds. Processing of step S51 is performed if it is determined that k = M holds, and processing of step S50 is performed if it is determined that k = M does not hold.

Step S50: The control unit 32 sets k = k + 1. Thereafter, the process from Step S45 is repeated.

Step S51: The control unit 32 determines whether or not all the pieces of $x_k$ are 0. If it is determined that all the pieces of $x_k$ are 0, processing of step S52 is performed. If it is determined that all the pieces of $x_k$ are not 0 (any one $x_k$ is not 0), one MCMC search is terminated.

Step S52: The energy calculation unit 33n updates $H_{best}$. If the updated H(x) is smaller than $H_{best}$, the energy calculation unit 33n sets the H(x) as a new $H_{best}$. After the processing of step S52, one MCMC search is terminated.

Note that the order of the processing illustrated in FIGs. 7 and 8 is an example, and the order of the processing may be appropriately changed. Furthermore, while the state variables and the auxiliary variables of the flip candidates are selected in the order of identification numbers in the exemplary process described above, they may be randomly selected.

According to the data processing method as described above, the $\lambda_k$ adjustment unit 33e adjusts $\lambda_k$ based on the result of comparison between H(x) and $H_{best}$ and the presence or absence of constraint condition violation represented by $x_k$ each time the MCMC search is performed T0 times. As a result, $\lambda_k$ may be appropriately adjusted by reflecting the solution search condition, and accordingly, the efficiency in searching for a solution to the combinatorial optimization problem may improve.

Furthermore, when $\lambda_k$ is adjusted, $h_i$ and H(x) are corrected based on the adjustment amount of $\lambda_k$, whereby the occurrence of a calculation error caused by changing of $\lambda_k$ may be suppressed.

Note that, as described above, the processing contents described above may be implemented by causing the data processing device 20 to execute a program.

The program may be recorded in a computer-readable recording medium (e.g., recording medium 26a). As the recording medium, for example, a magnetic disk, an optical disk, a magneto-optical disk, a semiconductor memory, or the like may be used. Examples of the magnetic disk include an FD and an HDD. Examples of the optical disk include a CD, a CD-recordable (R)/rewritable (RW), a DVD, and a DVD-R/RW. The program may be recorded in a portable recording medium and distributed. In that case, the program may be copied from the portable recording medium to another recording medium (e.g., HDD 23) and then executed.

(Exemplary Pipeline Processing)

The search unit 33 may process a plurality of replicas by pipeline processing.

FIG. 9 is a timing chart illustrating exemplary adjustment timing of $\lambda_k$ of each of the replicas in the pipeline processing. T0 iteration and T1 iteration are the number of times the MCMC search is repeated for the N state variables in each of the replicas. In the example of FIG. 9, T1 = T0 $\times$ L holds.

During the T0 iteration, $\lambda_k$ is fixed. During the T1 iteration, $\Delta\lambda_k$ (and $\lambda_{kinit}$) is fixed. In the example of FIG. 9, $\Delta\lambda_k$ during the T1 iteration between timing t1 and t2 is indicated as $\Delta\lambda_{k0}$, and $\Delta\lambda_k$ during the T1 iteration between timing t2 to t3 is indicated as $\Delta\lambda_{k1}$. Furthermore, $\lambda_k$ during the first T0 iteration between the timing t1 and t2 is indicated as $\lambda_{k0}$, and $\lambda_k$ during the next T0 iteration is indicated as $\lambda_{k1}$.

In one iteration, processing is sequentially performed on R pieces of replicas (indicated as R replicas).

The $\lambda_k$ adjustment timing may be shifted for each replica. In the example of FIG. 9, $\lambda_k$ adjustment of a replica 0 is carried out at the time of processing of the replica 0 during one iteration starting from timing tia. The $\lambda_k$ adjustment of a replica 1 is carried out at the time of processing of the replica 1 during one iteration starting from timing tib.

FIG. 10 is a timing chart illustrating exemplary pipeline processing of a plurality of replicas. In the example of FIG. 10, the number of replicas (R) is 16. In the pipeline processing, First-In, First-Out (FIFO) is used to adjust operation timing. Note that the memory in FIG. 10 represents a memory that is included in the $h_i$ update holding unit 33f6 in FIG. 6 and retains $h_i$, or a memory that is included in the $h_k$ update holding unit 33g2 in FIG. 6 and retains $h_k$.

Processing performed by the individual replicas is divided into an update phase and a trial phase. Although processing for the replica 0 will be mainly described below, similar processing is performed for other replicas.

The update phase includes a process in which update (flip) of the value of the state variable ($x_i$) or the auxiliary variable ($x_k$) is carried out and a process in which calculation of $\lambda_k$ is carried out. Furthermore, the update phase includes a process of reading the weight value for updating $h_i$ from the weight value holding unit 33d and a process of reading the weight value for updating $h_k$ from the weight value holding unit 33d. Moreover, the update phase includes a process of reading $\lambda_k$ from the variable setting unit 33a and a process of updating or correcting $h_i$ or $h_k$.

The trial phase includes a process of reading $h_i$ or $h_k$ from the memory mentioned above, a process of calculating $\Delta H$, a process of determining a flip variable (state variable or auxiliary variable for which the value update is carried out), and a process of H(x) calculation.

Note that each of the processes is performed in one or a plurality of clock cycles, for example.

The trial phase for the state variable starts at timing t10. For each of the replicas, the read of $h_i$ from the memory, the calculation of $\Delta H$, the determination of the flip variable based on $\Delta H$, and the calculation of H(x) are sequentially carried out. At timing t11, the identification number of the state variable, which is the flip variable determined in the replica 0, is supplied to the update unit 33m via the FIFO, and the update phase starts (timing t12). At the timing t12, the value of the state variable, which is the flip variable, is updated. Then, at timing t13, the weight value corresponding to the updated state variable is read from the weight value holding unit 33d. Then, $h_i$ and $h_k$ are updated based on the individual read values, and stored in the memory (timing t14).

The trial phase for the auxiliary variable starts at timing t15. For each of the replicas, the read of $h_k$ from the memory, the calculation of $\Delta H$, the determination of the flip variable based on $\Delta H$, and the calculation of H(x) are sequentially carried out. FIG. 10 illustrates an exemplary case where two auxiliary variables are determined as flip variables. The identification number of the two auxiliary variables, which are the flip variables determined in the replica 0, are supplied to the update unit 33m via the FIFO (timing t16, t17). Note that, although illustration is omitted, the above-described comparison between $H_{best}$ and H(x), the determination regarding the presence or absence of violation of each constraint condition based on the value of $x_k$, and the like are carried out at the timing t17. After those processes are performed, the update phase for the auxiliary variable starts (timing t18).

At timing t18 and t19, the values of the two auxiliary variables, which are the flip variables, are sequentially updated. Then, at timing t19 and t20, the weight value corresponding to the updated auxiliary variable is read from the weight value holding unit 33d, and $\lambda_k$ is read from the variable setting unit 33a. Then, $h_i$ is updated based on the individual read values (timing t20 to t21). Note that the calculation (adjustment) of $\lambda_k$ is carried out based on a result of the comparison between $H_{best}$ and H(x), a result of the determination regarding the presence or absence of violation of each constraint condition based on the value of $x_k$ at the timing t18. The correction of $h_i$ in a case where the value of $\lambda_k$ is changed is also carried out at the timing t20 to t21.

At timing t21 to t23, the correction of $h_i$ is carried out based on a change of $\lambda_k$ without changing the value of the auxiliary variable. In a case where adjustment to decrease the values of all the pieces of $\lambda_k$ (M pieces of $\lambda_k$) is carried out, for example, the correction process is performed in a period of M clock cycles. However, the correction process of $h_i$ based on a change of $\lambda_k$ that does not affect $h_i$ even if the value changes may be skipped.

At timing t22, the calculation of $\lambda_k$ that does not affect $h_i$ (without a local field change) is carried out. Since this calculation does not affect $h_i$, it may be started at the timing t22 between the timing t21 and t23 at which the correction of $h_i$ is carried out.

At timing t24 to t25, the correction process of H(x) based on a change of $\lambda_k$ is carried out. Processing similar to the processing at the timing t10 is performed again at timing t25.

Next, an example of evaluating a difference in the effect depending on the presence or absence of the $\lambda_k$ adjustment as described above will be described. The combinatorial optimization problem to be calculated is a set covering problem for arranging 5,800 people in 404 areas for which an optimum solution is known. When $\lambda_k$ is not adjusted, it has failed to reach the optimum solution even with $10^6$ iterations. When $\lambda_k$ is adjusted as described above, the optimum solution has been reached with 225,603 iterations.

FIG. 11 is a diagram illustrating another example of the data processing device. In FIG. 11, elements same as the elements illustrated in FIG. 3 are denoted by the same reference signs.

A data processing device 40 includes an accelerator card 41 coupled to a bus.

The accelerator card 41 is a hardware accelerator that searches for a solution to a combinatorial optimization problem. The accelerator card 41 includes an FPGA 41a and a DRAM 41b.

In the data processing device 40, the FPGA 41a and the DRAM 41b perform, for example, the processing of the processing unit 12 and the storage unit 11 illustrated in FIG. 1 or the processing of the control unit 32 and the search unit 33 illustrated in FIG. 4. In this case, each unit of the processing unit 12 and the storage unit 11 illustrated in FIG. 1 or the control unit 32 and the search unit 33 illustrated in FIG. 4 is implemented by various circuits built in the FPGA 41a, a memory in the FPGA 41a, or the DRAM 41b. The pipeline processing illustrated in FIGs. 9 and 10 may also be implemented using, for example, FIFO in the FPGA 41a.

Note that there may be a plurality of the accelerator cards 41.

While one aspect of the data processing device, the program, and the data processing method according to the present disclosure has been described based on the embodiments, this is merely an example, and is not limited to the description above.

While the case of mainly using the inequality constraint as the constraint condition has been described above, another constraint condition, such as an equality constraint, may also be used.

For example, in the case of using the equality constraint, the following equation (11) is used instead of the equation (4) for the total energy (H(x)).

[Math. 11]

$$\begin{aligned} H(x) &= E(x) + \sum_{\substack{i \in D \\ k \in M}} \lambda_k |R_k(x) - U_k| \\ &= E(x) + \sum_{\substack{i \in D \\ k \in M}} \lambda_k x_k \end{aligned} \tag{11}$$

Here, a spin variable having a value of -1 or 1 may be used as the auxiliary variable ($x_k$). In that case, it may be expressed as $\Delta x_k = -2x_k$. When the equality constraint is not satisfied (in the case of $R_k(x) \neq U_k$), $x_k$ becomes -1, and when the equality constraint is satisfied (in the case of $R_k(x) = U_k$), $x_k$ becomes +1.

When such an auxiliary variable is used, $\Delta H$ may be expressed as $\Delta H = +\lambda_k h_k \Delta x_k$ in a similar manner to the case described above.

Note that it is sufficient to set $\Delta H = +2\lambda_k h_k \Delta x_k$ instead of $\Delta H = +\lambda_k h_k \Delta x_k$ in a case of using a binary variable without using a spin variable.

Furthermore, the auxiliary variable may have values of equal to or greater than three values.

FIG. 12 is a diagram illustrating an example using a four-value auxiliary variable. The vertical axis represents magnitude of the constraint term with the identification number k, and the horizontal axis represents $h_k$.

Here, $x_k$ has four values 0, 1, 2, and 3. A state where a constraint condition is satisfied is indicated by $x_k = 0$, and three constraint condition violated states are indicated by $x_k$ = 1, 2, and 3. In the example of FIG. 12, a constraint violated state from ($h_1$, $g_1$) to ($h_2$, $g_2$), a constraint violated state from ($h_2$, $g_2$) to ($h_3$, $g_3$), and a constraint violated state equal to or greater than ($h_3$, $g_3$) are indicated.

Furthermore, as $\lambda_k$ described above, $\lambda_1$ is used when $x_k = 1$, $\lambda_2$ is used when $x_k = 2$, and $\lambda_3$ is used when $x_k = 3$. As a result, a constraint term that increases with different slopes as $h_k$ increases may be used, depending on whether $x_k$ = 1, 2, or 3.

In a case of using the auxiliary variable as described above, $\Delta H_{i \to j}$ in the case of changing from ($h_i$, $g_i$) to ($h_j$, $g_j$) may be represented as $\Delta H_{i \to j} = [\lambda_j(h_k - h_j) + g_j] - [\lambda_i(h_k - h_i) + g_i] = (\lambda_j - \lambda_i)h_k + [(g_j - \lambda_j h_j) - (g_i - \lambda_i h_i)]$.

## Claims

**1.** A data processing device comprising:

a storage unit that stores values of a plurality of state variables included in an Ising-type evaluation function that evaluates a solution to a combinatorial optimization problem, values of a plurality of auxiliary variables that represent whether there is violation of each of a plurality of constraint conditions of the combinatorial optimization problem, a total value of values of a plurality of constraint terms weighted by a coefficient that represents a weight of each of the plurality of constraint conditions and a value of the evaluation function, a first local field that represents a change amount of the total value when each of the values of the plurality of state variables changes, a second local field used to specify a constraint violation amount for each of the plurality of constraint conditions, and a value of the coefficient; and
a processing unit that:

repeats, at a time of searching for the solution, a search process that includes determining whether to permit a change in a value of a first state variable among the plurality of state variables based on the first local field, updating the value of the first state variable, the first local field, the second local field, and the total value when the change in the value of the first state variable is determined to be permitted, determining whether to permit a change in a value of a first auxiliary variable among the plurality of auxiliary variables based on the second local field, and updating the value of the first auxiliary variable and the first local field when the change in the value of the first auxiliary variable is determined to be permitted, and
adjusts the value of the coefficient based on one selected from the total value and whether there is the violation.

**2.** The data processing device according to claim 1, wherein the adjusting the value of the coefficient is executed each time the search process is performed a certain number of times.

**3.** The data processing device according to claim 1, wherein the processing unit decreases the value of the coefficient of each of the plurality of constraint conditions when the total value at the time of adjustment of the value of the coefficient is equal to or greater than a minimum value of the total value obtained before the adjustment and in a state where none of the plurality of constraint conditions is violated.

**4.** The data processing device according to claim 1, wherein the processing unit, when the total value at the time of adjustment of the value of the coefficient is smaller than a minimum value of the total value obtained before the adjustment and in a state where none of the plurality of constraint conditions is violated and there is a constraint condition in which the violation occurs among the plurality of constraint conditions, increases the value of the coefficient of the constraint condition.

**5.** The data processing device according to claim 1, wherein the processing unit corrects the first local field and the total value based on an adjustment amount of the value of the coefficient.

**6.** The data processing device according to claim 5, wherein the processing unit corrects the first local field by subtracting a product of a weight value between the first state variable and the first auxiliary variable, the adjustment amount, and the value of the first auxiliary variable from the first local field that represents the change amount when the value of the first state variable changes.

**7.** The data processing device according to claim 5, wherein the processing unit corrects the total value by adding a product of the adjustment amount, the second local field, and the first auxiliary variable to the total value.

**8.** A data processing program that causes at least one computer to execute a process, the process comprising:

storing values of a plurality of state variables included in an Ising-type evaluation function that evaluates a solution to a combinatorial optimization problem, values of a plurality of auxiliary variables that represent whether there is violation of each of a plurality of constraint conditions of the combinatorial optimization problem, a total value of values of a plurality of constraint terms weighted by a coefficient that represents a weight of each of the plurality of constraint conditions and a value of the evaluation function, a first local field that represents a change amount of the total value when each of the values of the plurality of state variables changes, a second local field used to specify a constraint violation amount for each of the plurality of constraint conditions, and a value of the coefficient;
repeating, at a time of searching for the solution, a search process that includes determining whether to permit a change in a value of a first state variable among the plurality of state variables based on the first local field, updating the value of the first state variable, the first local field, the second local field, and the total value when the change in the value of the first state variable is determined to be permitted, determining whether to permit a change in a value of a first auxiliary variable among the plurality of auxiliary variables based on the second local field, and updating the value of the first auxiliary variable and the first local field when the change in the value of the first auxiliary variable is determined to be permitted; and
adjusting the value of the coefficient based on one selected from the total value and whether there is the violation.

**9.** A data processing method for a computer to execute a process comprising:

storing values of a plurality of state variables included in an Ising-type evaluation function that evaluates a solution to a combinatorial optimization problem, values of a plurality of auxiliary variables that represent whether there is violation of each of a plurality of constraint conditions of the combinatorial optimization problem, a total value of values of a plurality of constraint terms weighted by a coefficient that represents a weight of each of the plurality of constraint conditions and a value of the evaluation function, a first local field that represents a change amount of the total value when each of the values of the plurality of state variables changes, a second local field used to specify a constraint violation amount for each of the plurality of constraint conditions, and a value of the coefficient;

repeating, at a time of searching for the solution, a search process that includes determining whether to permit a change in a value of a first state variable among the plurality of state variables based on the first local field, updating the value of the first state variable, the first local field, the second local field, and the total value when the change in the value of the first state variable is determined to be permitted, determining whether to permit a change in a value of a first auxiliary variable among the plurality of auxiliary variables based on the second local field, and updating the value of the first auxiliary variable and the first local field when the change in the value of the first auxiliary variable is determined to be permitted; and

adjusting the value of the coefficient based on one selected from the total value and whether there is the violation.

FIG. 1

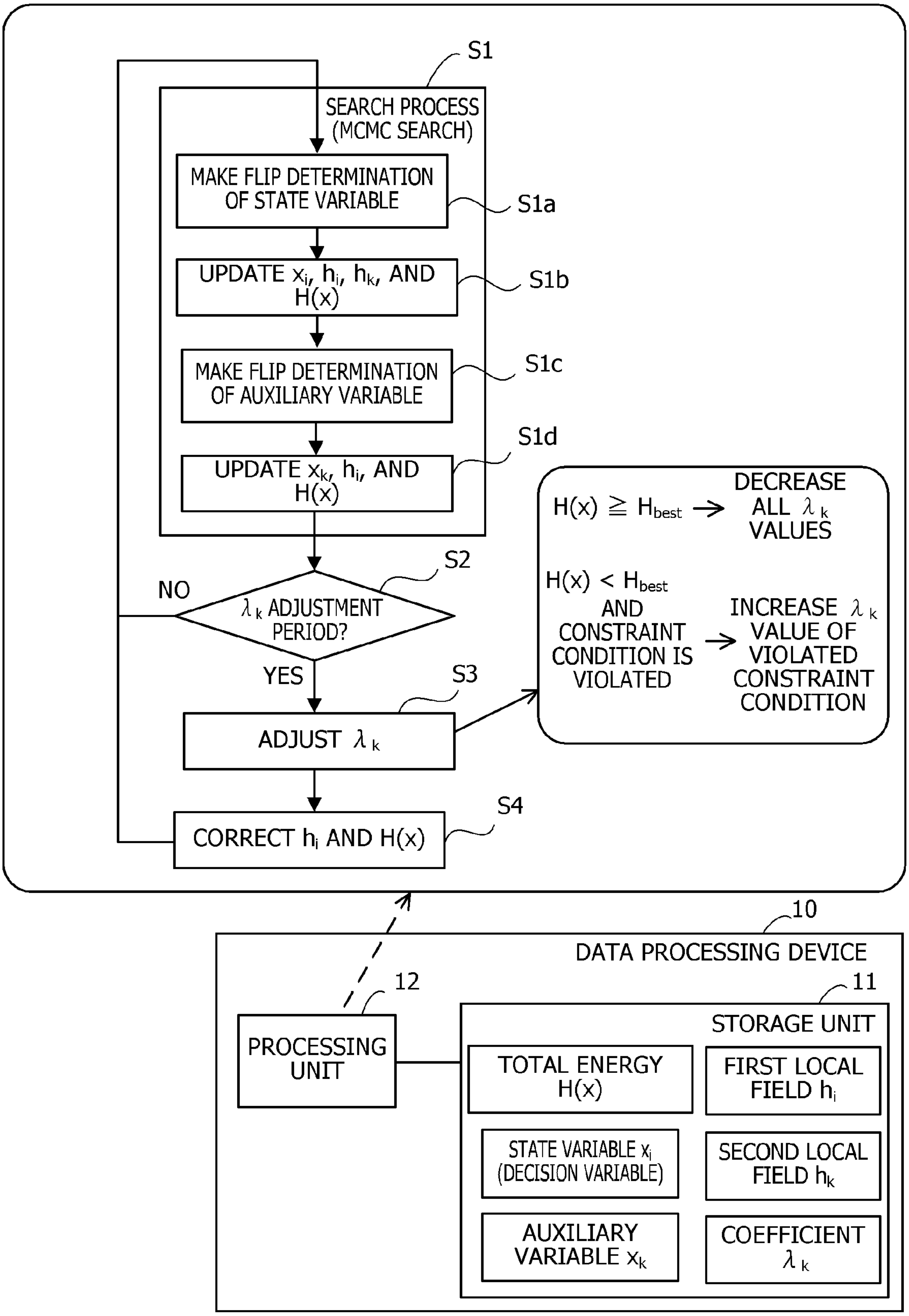
S1
SEARCH PROCESS (MCMC SEARCH)
MAKE FLIP DETERMINATION OF STATE VARIABLE
S1a
UPDATE $x_i$, $h_i$, $h_k$, AND H(x)
S1b
MAKE FLIP DETERMINATION OF AUXILIARY VARIABLE
S1c
UPDATE $x_k$, $h_i$, AND H(x)
S1d
NO
$\lambda_k$ ADJUSTMENT PERIOD?
S2
YES
ADJUST $\lambda_k$
S3
CORRECT $h_i$ AND H(x)
S4
$H(x) \geqq H_{best}$ → DECREASE ALL $\lambda_k$ VALUES
$H(x) < H_{best}$ AND CONSTRAINT CONDITION IS VIOLATED → INCREASE $\lambda_k$ VALUE OF VIOLATED CONSTRAINT CONDITION
10
DATA PROCESSING DEVICE
12
PROCESSING UNIT
11
STORAGE UNIT
TOTAL ENERGY H(x)
FIRST LOCAL FIELD $h_i$
STATE VARIABLE $x_i$ (DECISION VARIABLE)
SECOND LOCAL FIELD $h_k$
AUXILIARY VARIABLE $x_k$
COEFFICIENT $\lambda_k$

FIG. 2

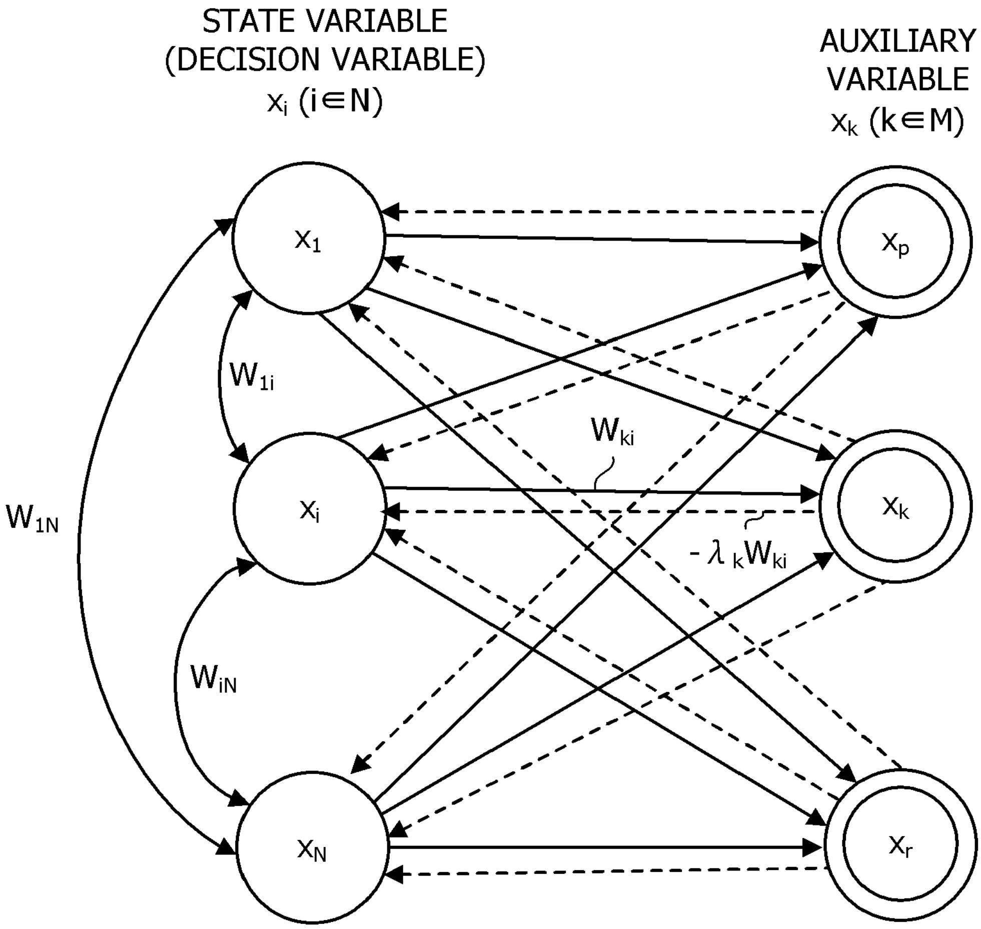
STATE VARIABLE
(DECISION VARIABLE)
$x_i$ (i∈N)
AUXILIARY
VARIABLE
$x_k$ (k∈M)
$x_1$
$x_i$
$x_N$
$x_p$
$x_k$
$x_r$
$W_{1i}$
$W_{1N}$
$W_{iN}$
$W_{ki}$
$-\lambda_k W_{ki}$

FIG. 3

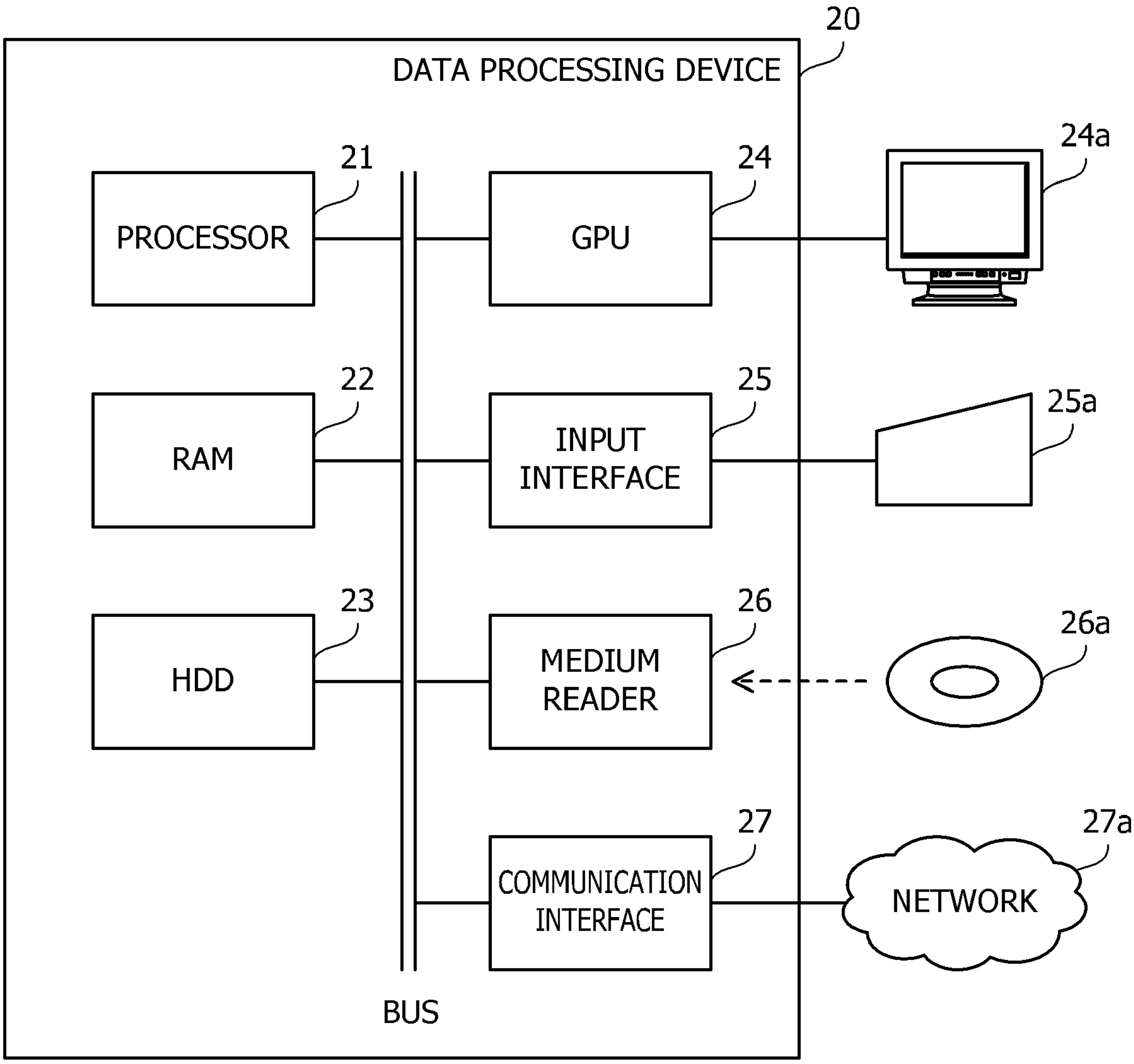
20
DATA PROCESSING DEVICE
21
PROCESSOR
22
RAM
23
HDD
24
GPU
25
INPUT INTERFACE
26
MEDIUM READER
27
COMMUNICATION INTERFACE
BUS
24a
25a
26a
27a
NETWORK

FIG. 4

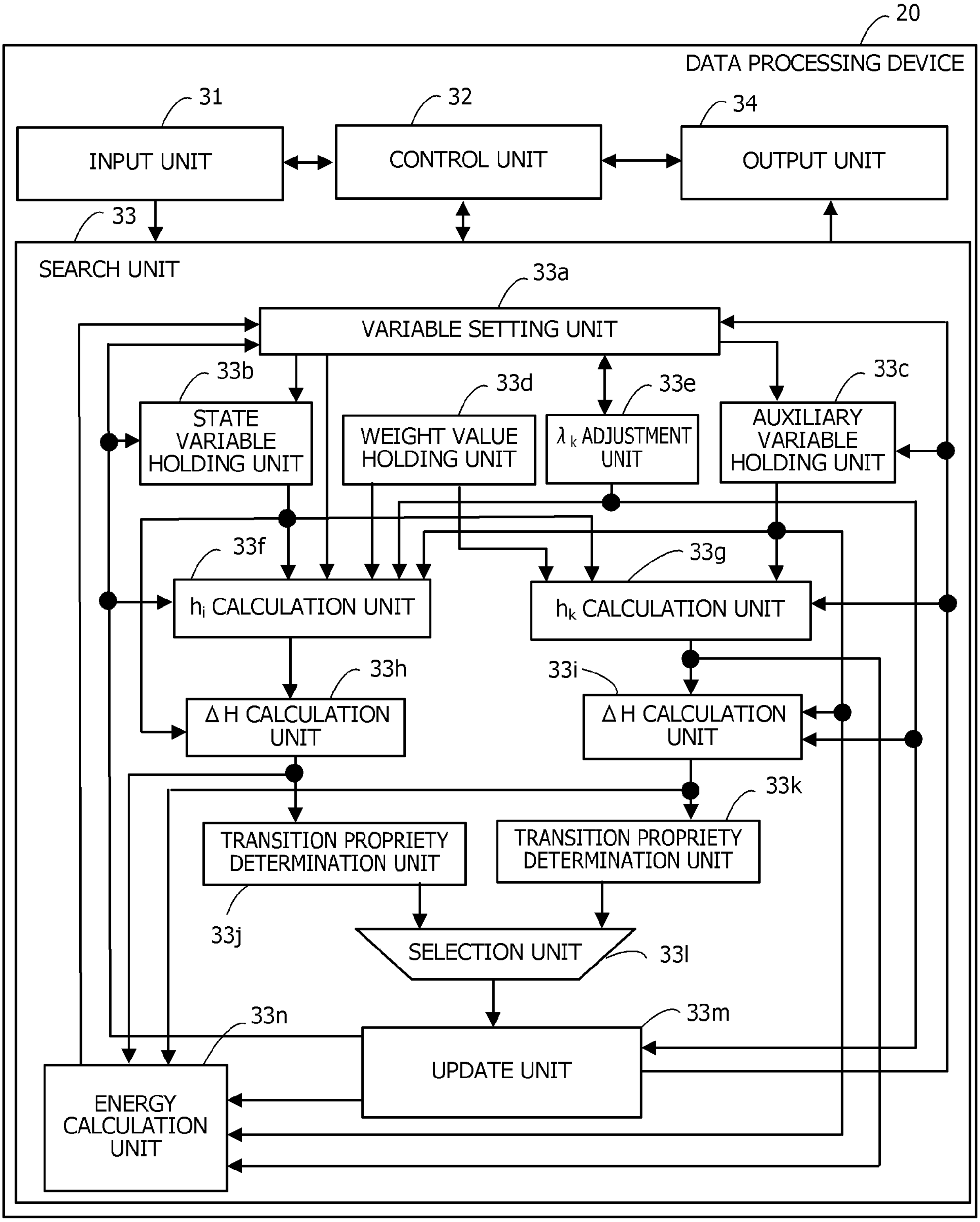
20
DATA PROCESSING DEVICE
31
INPUT UNIT
32
CONTROL UNIT
34
OUTPUT UNIT
33
SEARCH UNIT
33a
VARIABLE SETTING UNIT
33b
STATE VARIABLE HOLDING UNIT
33d
WEIGHT VALUE HOLDING UNIT
33e
λk ADJUSTMENT UNIT
33c
AUXILIARY VARIABLE HOLDING UNIT
33f
hi CALCULATION UNIT
33g
hk CALCULATION UNIT
33h
ΔH CALCULATION UNIT
33i
ΔH CALCULATION UNIT
33k
TRANSITION PROPRIETY DETERMINATION UNIT
TRANSITION PROPRIETY DETERMINATION UNIT
33j
SELECTION UNIT
33l
33n
33m
UPDATE UNIT
ENERGY CALCULATION UNIT

FIG. 5

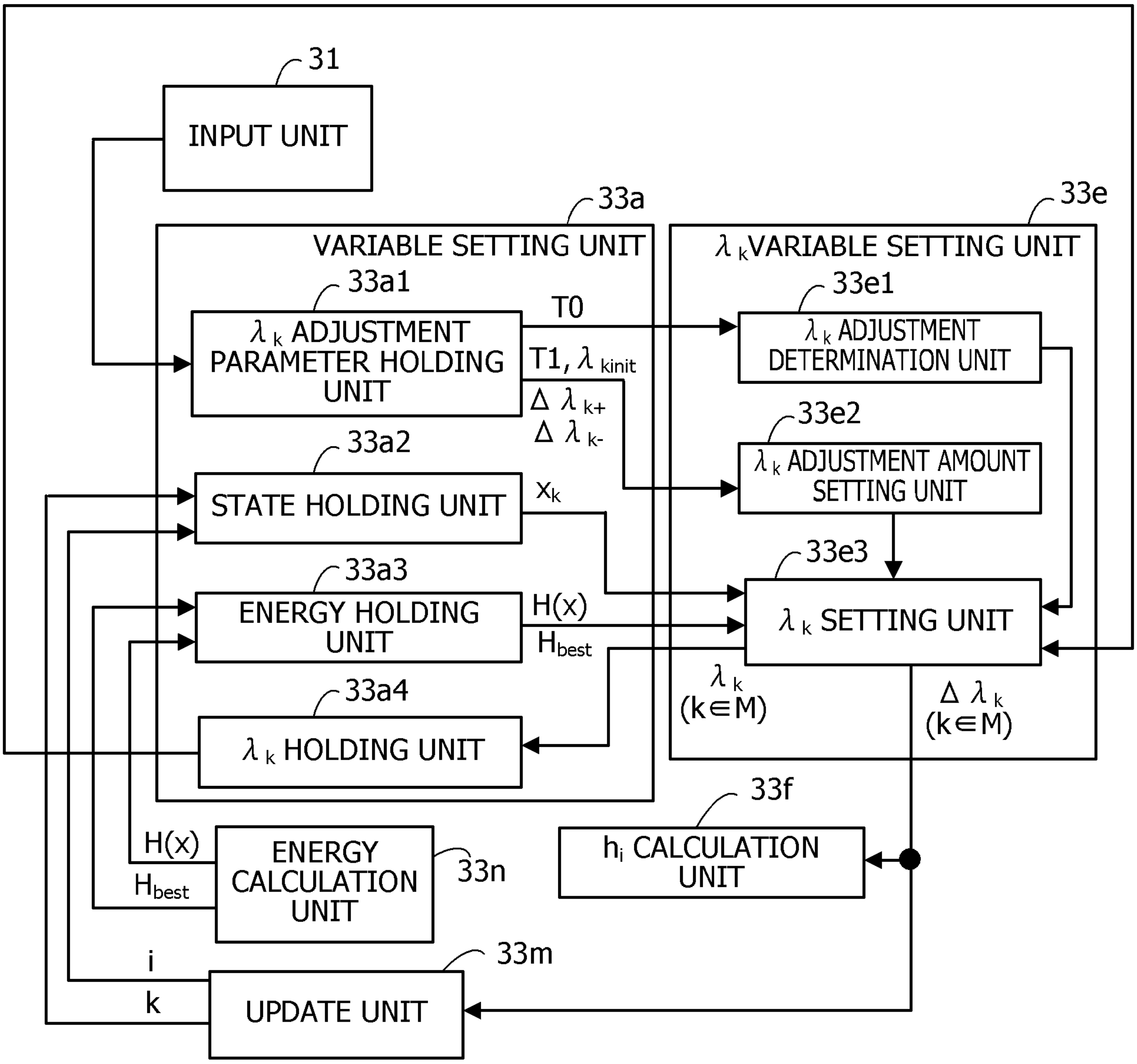
31
INPUT UNIT
33a
VARIABLE SETTING UNIT
33a1
λk ADJUSTMENT PARAMETER HOLDING UNIT
T0
T1, λkinit
Δλk+
Δλk-
33a2
STATE HOLDING UNIT
xk
33a3
ENERGY HOLDING UNIT
H(x)
Hbest
33a4
λk HOLDING UNIT
33e
λk VARIABLE SETTING UNIT
33e1
λk ADJUSTMENT DETERMINATION UNIT
33e2
λk ADJUSTMENT AMOUNT SETTING UNIT
33e3
λk SETTING UNIT
λk
(k∈M)
Δλk
(k∈M)
33f
hi CALCULATION UNIT
H(x)
Hbest
ENERGY CALCULATION UNIT
33n
i
k
33m
UPDATE UNIT

# FIG. 6

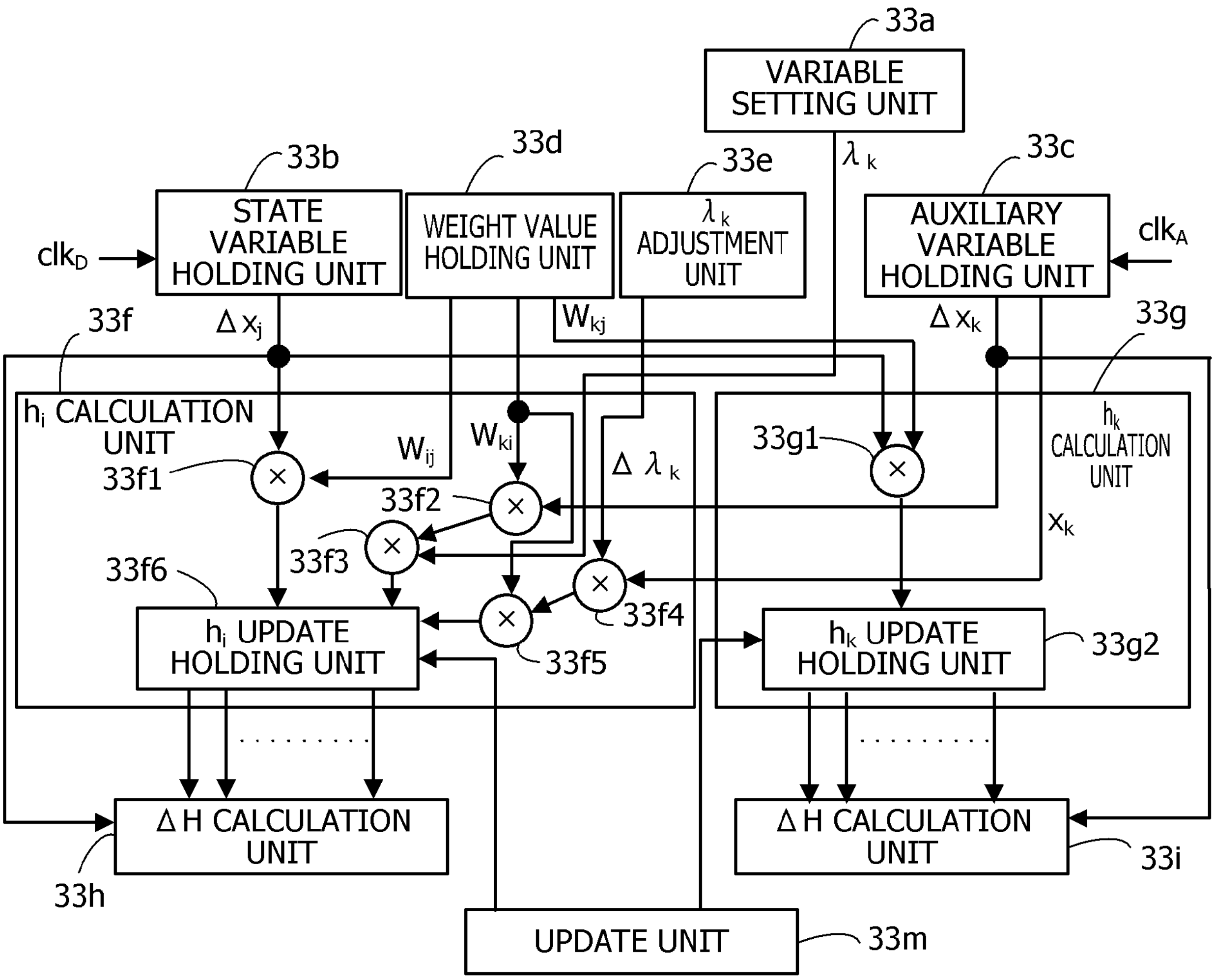
33a
VARIABLE SETTING UNIT
33b
STATE VARIABLE HOLDING UNIT
33d
WEIGHT VALUE HOLDING UNIT
33e
λk ADJUSTMENT UNIT
33c
AUXILIARY VARIABLE HOLDING UNIT
clkD
clkA
λk
Δxj
Wkj
Δxk
33f
33g
hi CALCULATION UNIT
33f1
Wij
Wki
33f2
33f3
Δλk
33f4
33f5
33f6
hi UPDATE HOLDING UNIT
33g1
hk CALCULATION UNIT
xk
hk UPDATE HOLDING UNIT
33g2
ΔH CALCULATION UNIT
33h
ΔH CALCULATION UNIT
33i
UPDATE UNIT
33m

FIG. 7

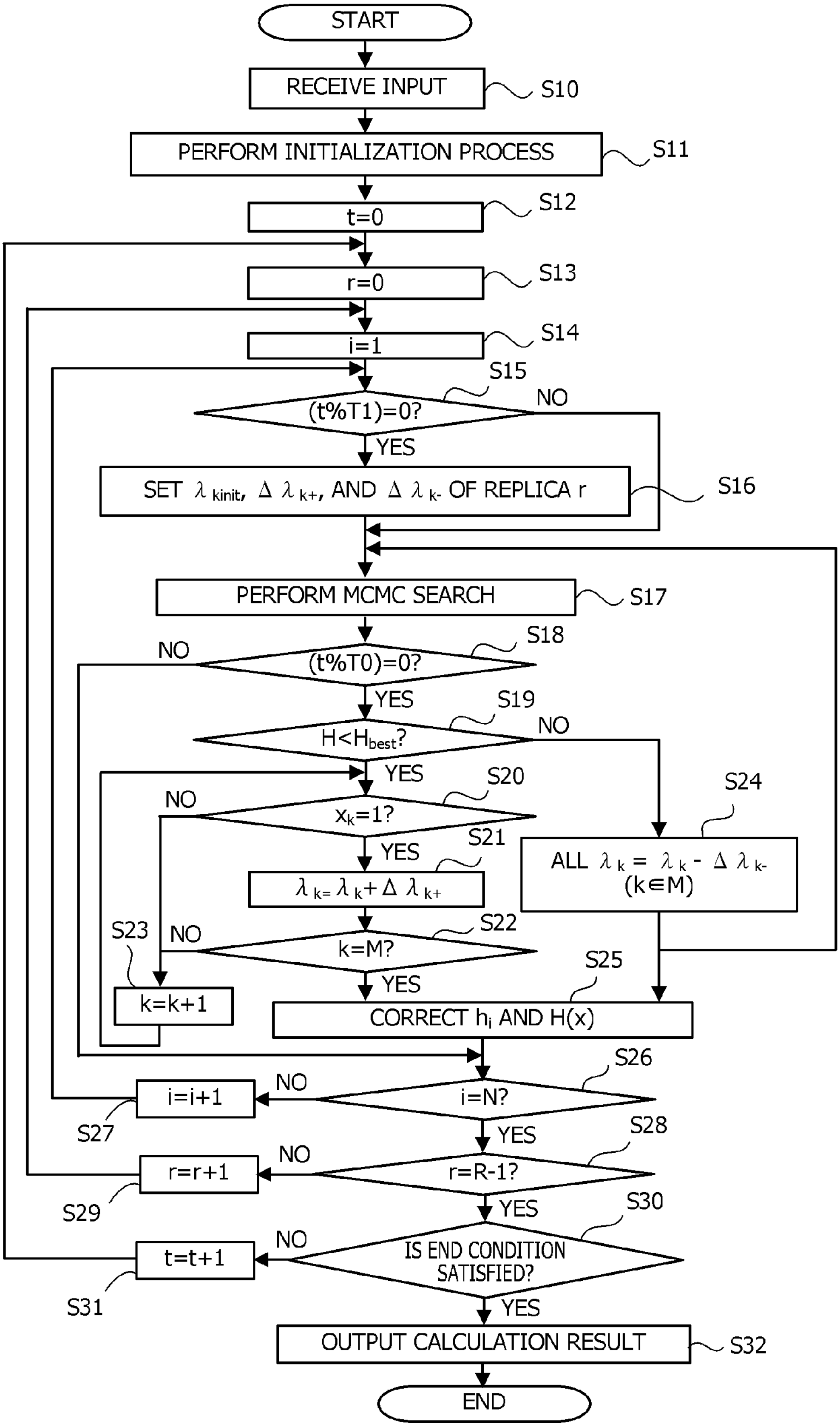
START
RECEIVE INPUT
S10
PERFORM INITIALIZATION PROCESS
S11
t=0
S12
r=0
S13
i=1
S14
S15
(t%T1)=0?
NO
YES
SET λ kinit, Δ λ k+, AND Δ λ k- OF REPLICA r
S16
PERFORM MCMC SEARCH
S17
S18
NO
(t%T0)=0?
YES
S19
H<Hbest?
NO
YES
S20
NO
xk=1?
S24
YES
S21
λ k= λ k+Δ λ k+
ALL λ k = λ k - Δ λ k-
(k∈M)
S22
S23
NO
k=M?
YES
S25
k=k+1
CORRECT hi AND H(x)
S26
i=i+1
NO
i=N?
S27
YES
S28
r=r+1
NO
r=R-1?
S29
YES
S30
t=t+1
NO
IS END CONDITION SATISFIED?
S31
YES
OUTPUT CALCULATION RESULT
S32
END

FIG. 8

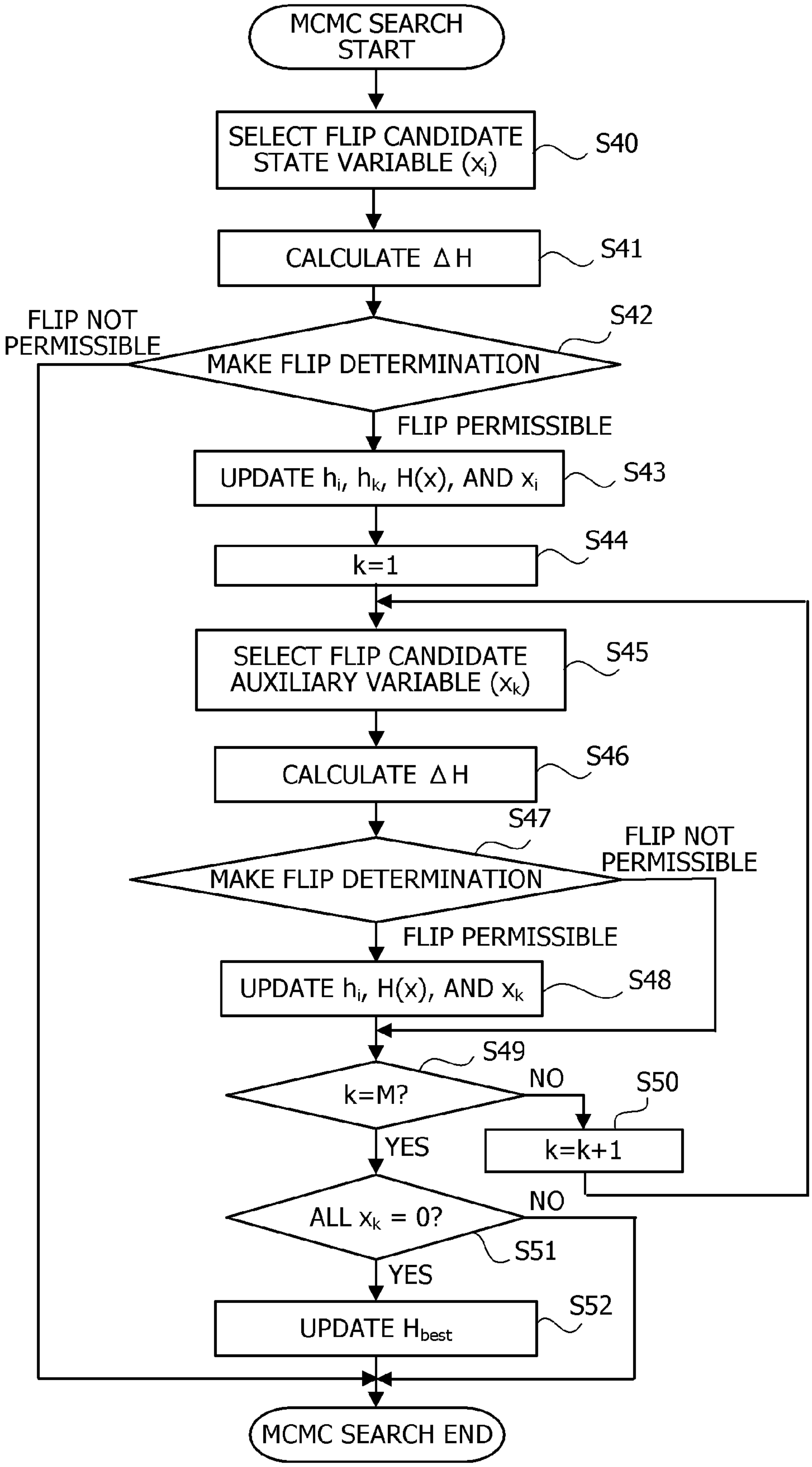
MCMC SEARCH START
SELECT FLIP CANDIDATE STATE VARIABLE ($x_i$)
S40
CALCULATE ΔH
S41
FLIP NOT PERMISSIBLE
S42
MAKE FLIP DETERMINATION
FLIP PERMISSIBLE
UPDATE $h_i$, $h_k$, H(x), AND $x_i$
S43
k=1
S44
SELECT FLIP CANDIDATE AUXILIARY VARIABLE ($x_k$)
S45
CALCULATE ΔH
S46
S47
FLIP NOT PERMISSIBLE
MAKE FLIP DETERMINATION
FLIP PERMISSIBLE
UPDATE $h_i$, H(x), AND $x_k$
S48
S49
k=M?
NO
S50
YES
k=k+1
ALL $x_k$ = 0?
NO
S51
YES
UPDATE $H_{best}$
S52
MCMC SEARCH END

FIG. 9

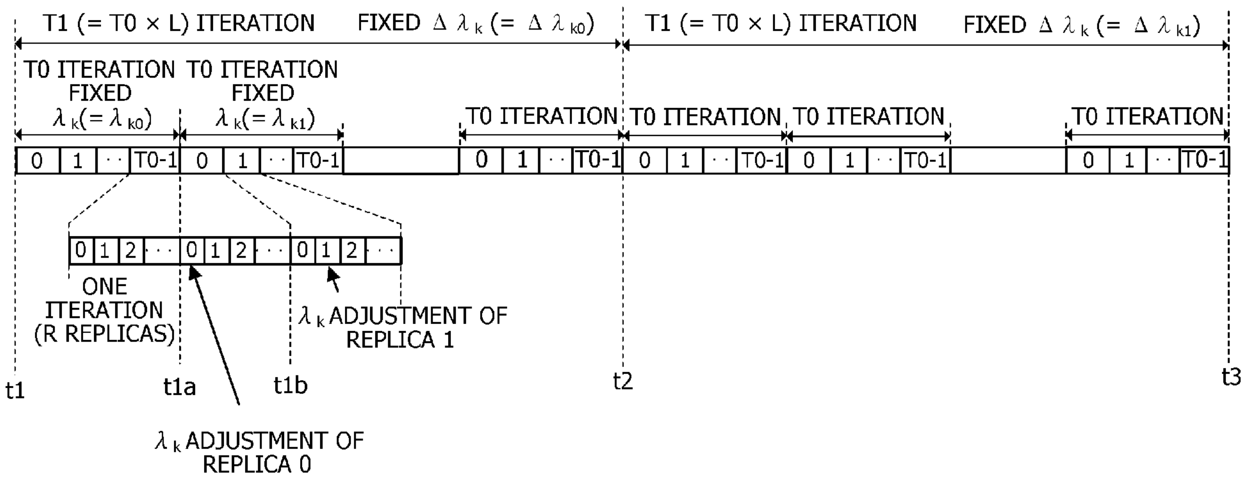
T1 (= T0 × L) ITERATION
FIXED Δ λ k (= Δ λ k0)
T1 (= T0 × L) ITERATION
FIXED Δ λ k (= Δ λ k1)
T0 ITERATION FIXED λ k(= λ k0)
T0 ITERATION FIXED λ k(= λ k1)
T0 ITERATION
T0 ITERATION
T0 ITERATION
T0 ITERATION
0
1
T0-1
0
1
2
ONE ITERATION (R REPLICAS)
λ k ADJUSTMENT OF REPLICA 1
λ k ADJUSTMENT OF REPLICA 0
t1
t1a
t1b
t2
t3

FIG. 10

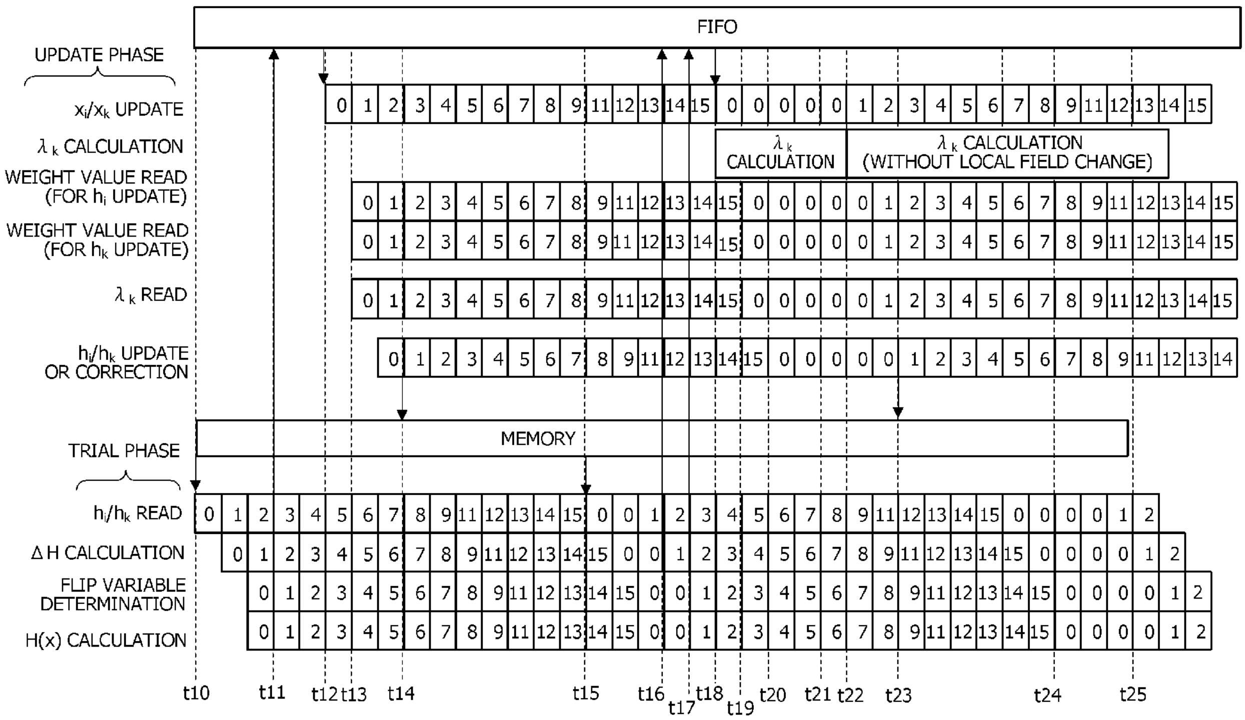
FIFO
UPDATE PHASE
$x_i/x_k$ UPDATE
$\lambda_k$ CALCULATION
WEIGHT VALUE READ (FOR $h_i$ UPDATE)
WEIGHT VALUE READ (FOR $h_k$ UPDATE)
$\lambda_k$ READ
$h_i/h_k$ UPDATE OR CORRECTION
$\lambda_k$ CALCULATION
$\lambda_k$ CALCULATION (WITHOUT LOCAL FIELD CHANGE)
MEMORY
TRIAL PHASE
$h_i/h_k$ READ
ΔH CALCULATION
FLIP VARIABLE DETERMINATION
H(x) CALCULATION
t10 t11 t12 t13 t14 t15 t16 t17 t18 t19 t20 t21 t22 t23 t24 t25

FIG. 11

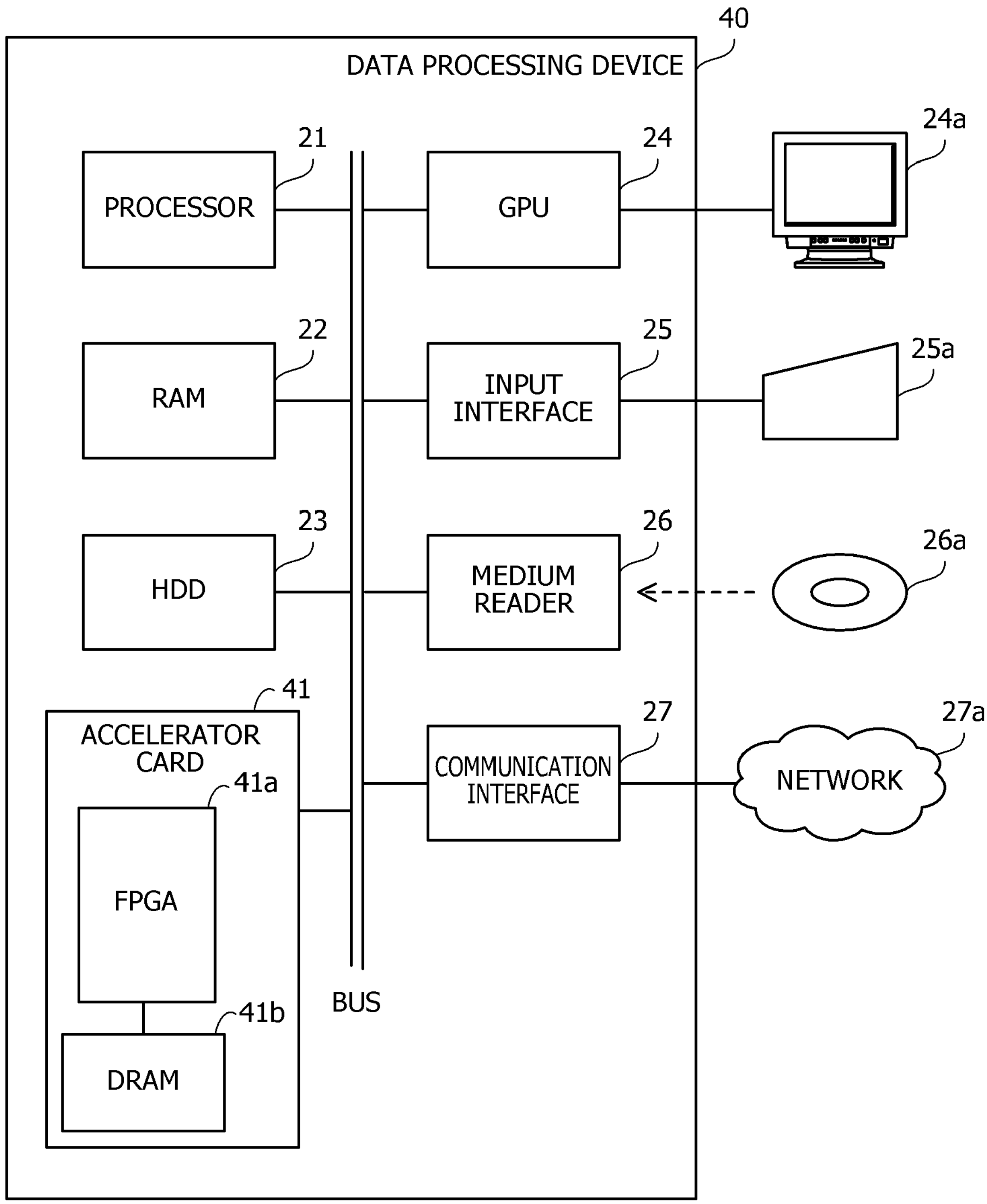
40
DATA PROCESSING DEVICE
21
PROCESSOR
22
RAM
23
HDD
41
ACCELERATOR CARD
41a
FPGA
41b
DRAM
BUS
24
GPU
24a
25
INPUT INTERFACE
25a
26
MEDIUM READER
26a
27
COMMUNICATION INTERFACE
27a
NETWORK

FIG. 12

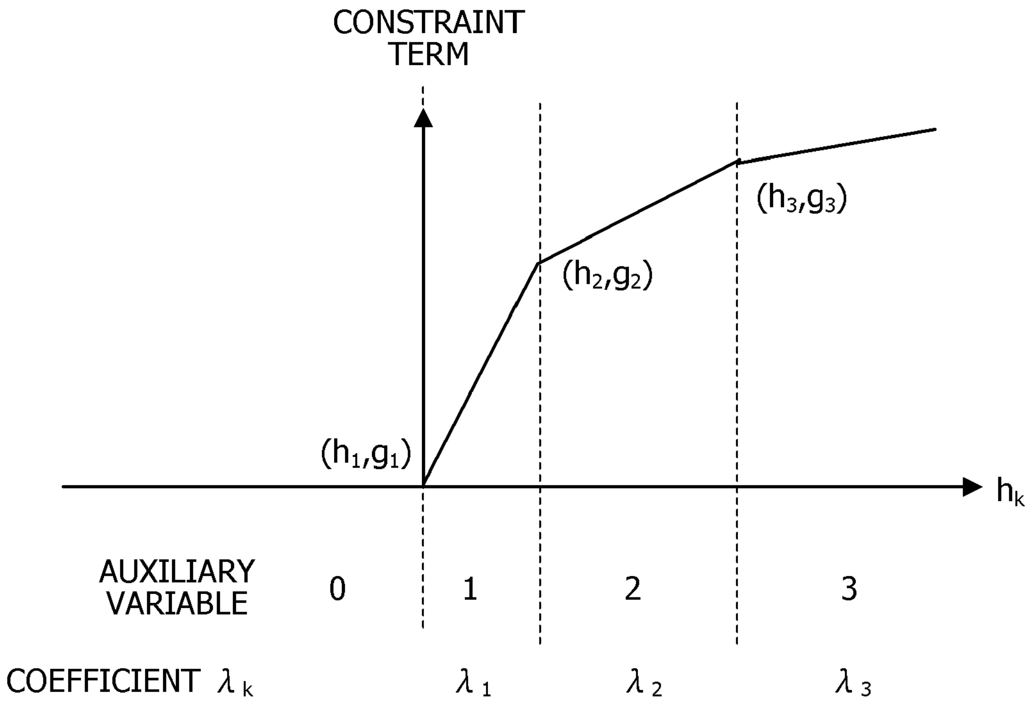
CONSTRAINT TERM
(h1,g1)
(h2,g2)
(h3,g3)
hk
AUXILIARY VARIABLE
0
1
2
3
COEFFICIENT λk
λ1
λ2
λ3

Europäisches Patentamt
European Patent Office
Office européen des brevets

# EUROPEAN SEARCH REPORT

Application Number
EP 23 19 4793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 757 908 A1 (FUJITSU LTD [JP]) 30 December 2020 (2020-12-30) * paragraphs [0015] - [0047] * * paragraphs [0056] - [0080] * * paragraphs [0124] - [0148] * * figures 1-4, 9, 10 * ----- | 1-9 | INV. G06N5/01 G06N7/01 |
| A | M. PARIZY ET AL.: "Analysis and acceleration of the quadratic knapsack problem on an Ising machine", IEICE TRANSACTIONS ON FUNDAMENTALS OF ELECTRONICS, COMMUNICATIONS AND COMPUTER SCIENCES., vol. E104.A, no. 11, 8 July 2021 (2021-07-08), pages 1526-1535, XP093006364, JP ISSN: 0916-8508, DOI: 10.1587/transfun.2020KEP0007 * the whole document * ----- | 1-9 | |
| A | G. GROSSI ET AL.: "FPGA implementation of a stochastic neural network for monotonic pseudo-Boolean optimization", NEURAL NETWORKS, ELSEVIER SCIENCE PUBLISHERS, BARKING, GB, vol. 21, no. 6, 3 July 2008 (2008-07-03), pages 872-879, XP024527324, ISSN: 0893-6080, DOI: 10.1016/J.NEUNET.2008.06.018 [retrieved on 2008-07-03] * abstract * * sections 3.3 and 4 * ----- | 1-9 | TECHNICAL FIELDS SEARCHED (IPC) G06N |

The present search report has been drawn up for all claims

| Place of search | Date of completion of the search | Examiner |
|---|---|---|
| The Hague | 28 February 2024 | Millet, Guillaume |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 19 4793

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2024

| Patent document cited in search report | Publication date | Patent family member(s) | Publication date |
|---|---|---|---|
| EP 3757908 A1 | 30-12-2020 | CN 112100799 A | 18-12-2020 |
| | | EP 3757908 A1 | 30-12-2020 |
| | | JP 7323777 B2 | 09-08-2023 |
| | | JP 2020204928 A | 24-12-2020 |
| | | US 2020401651 A1 | 24-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020201598 A
- JP 2020204928 A
- US 20210216897
- US 20210271214